# EUROPEAN PATENT APPLICATION

(11) **EP 4 827 217 A1**
(43) Date of publication of application: **21.10.2026**
(21) Application number: 24922748.9
(22) Date of filing: 05.02.2024
(51) Int. Cl.: H04W 72/50

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Mewburn Ellis LLP
(86) International application number: PCT/CN2024/076084
(87) International publication number: WO 2025/166502

(57) **Abstract**

Provided are a wireless communication method, a terminal device, and a network device. The method includes: a first receiver of the terminal device monitoring a first signal on a first resource; where the first signal is used to wake up a second receiver, and the first resource satisfies a first rule. The disclosure proposes that the first resource can satisfy the first rule. For the terminal device, the terminal device can determine the first resource according to the first rule, so as to monitor the first signal on an appropriate resource, thereby accurately receiving the first signal sent by the network device. For the network device, the network device can determine the first resource according to the first rule, so as to send the first signal on an appropriate resource, thereby enabling the terminal device to accurately receive the first signal.

## Description

### TECHNICAL FIELD

The disclosure relates to the field of communication technologies, and more specifically, to a wireless communication method, a terminal device, and a network device.

### BACKGROUND

In some communication technologies, a first receiver (e.g., a low power-wake up receiver (LP-WUR)) is introduced into a terminal device. During a process in which the first receiver monitors a first signal (e.g., a low power-wake up signal (LP-WUS)), a second receiver (e.g., a main receiver (MR)) may be in a low-power state. The first signal may be used to wake up the second receiver. For example, upon receiving the first signal, the first receiver may wake up the second receiver. Since the second receiver can be in the low-power state, this solution can save energy consumption of the second receiver.

### SUMMARY

The disclosure provides a wireless communication method, a terminal device, and a network device. Various aspects involved in the disclosure are introduced below.

In a first aspect, a wireless communication method is provided. The method includes: monitoring, by a first receiver of a terminal device, a first signal on a first resource; where the first signal is used to wake up a second receiver, and the first resource satisfies a first rule.

In a second aspect, a wireless communication method is provided. The method includes: sending, by a network device, a first signal to a first receiver of a terminal device; where the first signal is capable of being transmitted on a first resource, the first signal is used to wake up a second receiver, and the first resource satisfies a first rule.

In a third aspect, a terminal device is provided. The terminal device includes a first receiver. The first receiver includes: a monitoring unit configured to monitor a first signal on a first resource; where the first signal is used to wake up a second receiver, and the first resource satisfies a first rule.

In a fourth aspect, a network device is provided. The network device includes: a sending unit configured to send a first signal to a first receiver of a terminal device; where the first signal is capable of being transmitted on a first resource, the first signal is used to wake up a second receiver, and the first resource satisfies a first rule.

In a fifth aspect, a terminal device is provided, including a processor and a memory. The memory is configured to store one or more computer programs. The processor is configured to invoke the computer programs from the memory to cause the terminal device to perform part or all of the steps of the method of the first aspect.

In a sixth aspect, a network device is provided, including a processor, a memory, and a transceiver. The memory is configured to store one or more computer programs. The processor is configured to invoke the computer programs from the memory to cause the network device to perform part or all of the steps of the method of the second aspect.

In a seventh aspect, an embodiment of the disclosure provides a communication system. The system includes the above-mentioned terminal device and/or network device. In another possible design, the system may further include other devices that interact with the terminal device or the network device in the solutions provided by the embodiments of the disclosure.

In an eighth aspect, an embodiment of the disclosure provides a computer-readable storage medium. The computer-readable storage medium stores a computer program. The computer program causes a terminal device and/or a network device to perform part or all of the steps of the methods of the above aspects.

In a ninth aspect, an embodiment of the disclosure provides a computer program product. The computer program product includes a non-transitory computer-readable storage medium storing a computer program. The computer program is operable to cause a terminal device and/or a network device to perform part or all of the steps of the methods of the above aspects. In some implementations, the computer program product may be a software installation package.

In a tenth aspect, an embodiment of the disclosure provides a chip. The chip includes a memory and a processor. The processor may invoke and execute a computer program from the memory to implement part or all of the steps described in the methods of the above aspects.

The disclosure proposes that the first resource may satisfy the first rule. For the terminal device, the terminal device may determine the first resource according to the first rule, so as to monitor the first signal on an appropriate resource, thereby accurately receiving the first signal sent by the network device. For the network device, the network device may determine the first resource according to the first rule, so as to send the first signal on an appropriate resource, so that the terminal device can accurately receive the first signal.

### BRIEF DESCRIPTION OF THE DRAWINGS

FIG. 1 is a schematic diagram of a wireless communication system to which embodiments of the disclosure are applied.
FIG. 2 is an example diagram of an association relationship between a paging early indication (PEI) and a paging occasion (PO).
FIG. 3 is an example diagram of a structure of a synchronization signal/PBCH block (SSB).
FIG. 4A is an example diagram of a scenario of transmitting SSBs.
FIG. 4B is an example diagram of SSB distribution when *f* ≤ 3*GH*z.
FIG. 5A is an example waveform diagram of OOK-1.
FIG. 5B is an example waveform diagram of OOK-2.
FIG. 6 is a schematic flowchart of a wireless communication method provided by an embodiment of the disclosure.
FIG. 7 is an example diagram of multiple frequency domain resource sets provided by an embodiment of the disclosure.
FIG. 8 is a schematic diagram of a first frequency domain resource set and a second frequency domain resource set provided by an embodiment of the disclosure.
FIG. 9 is another schematic diagram of a first frequency domain resource set and a second frequency domain resource set provided by an embodiment of the disclosure.
FIG. 10 is an example diagram of an arrangement of time domain resources provided by an embodiment of the disclosure.
FIG. 11 is an example diagram of an association between a second time domain resource and N candidate time domain resources provided by an embodiment of the disclosure.
FIG. 12 is an example diagram of time domain resources occupied by a first signal, a synchronization signal, and a PO provided by an embodiment of the disclosure.
FIG. 13 is an example diagram of a wake-up frame provided by an embodiment of the disclosure.
FIG. 14 is a schematic structural diagram of a terminal device provided by an embodiment of the disclosure.
FIG. 15 is a schematic structural diagram of a network device provided by an embodiment of the disclosure.
FIG. 16 is a schematic structural diagram of an apparatus for communication provided by an embodiment of the disclosure.

### DETAILED DESCRIPTION

The following describes the technical solutions in the disclosure with reference to the accompanying drawings.

### Communication System

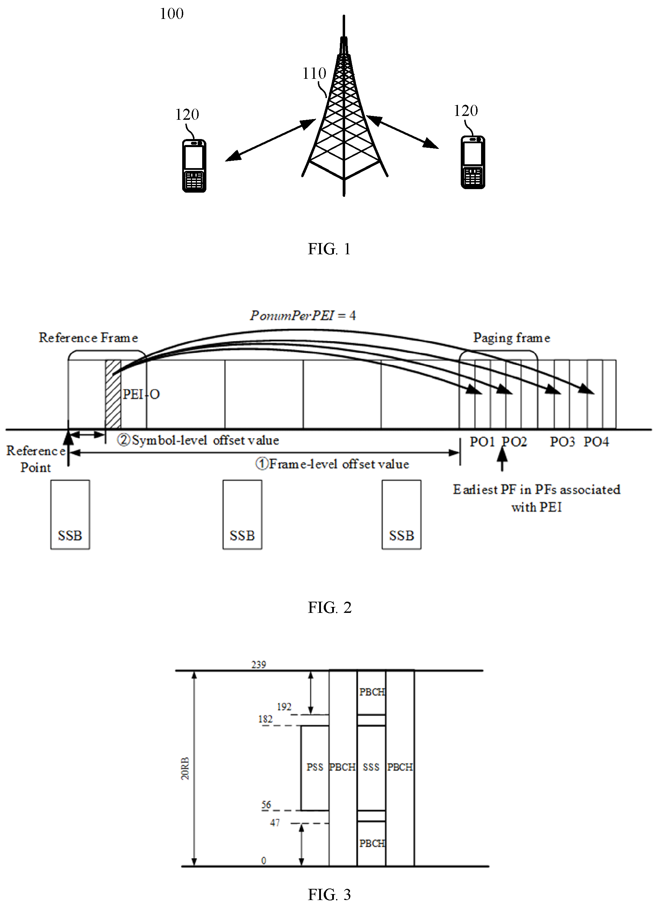

FIG. 1 is a wireless communication system 100 to which embodiments of the disclosure are applied. The wireless communication system 100 may include a communication device. The communication device may include a network device 110 and a terminal device 120. The network device 110 may be a device that communicates with the terminal device 120.

FIG. 1 exemplarily illustrates one network device and two terminals. Optionally, the wireless communication system 100 may include multiple network devices, and the coverage area of each network device may include other numbers of terminal devices, which is not limited in the embodiments of the disclosure.

Optionally, the wireless communication system 100 may further include other network entities such as a network controller and a mobility management entity, which is not limited in the embodiments of the disclosure.

It should be understood that the technical solutions in the embodiments of the disclosure can be applied to various communication systems, for example, a 5th generation (5G) system or new radio (NR), a long term evolution (LTE) system, an LTE frequency division duplex (FDD) system, an LTE time division duplex (TDD) system, etc. The technical solutions provided in the disclosure can also be applied to future communication systems, such as a 6th generation mobile communication system, a satellite communication system, and so on.

The terminal device in the embodiments of the disclosure may also be referred to as user equipment (UE), access terminal, subscriber unit, subscriber station, mobile station (MS), mobile terminal (MT), remote station, remote terminal, mobile device, user terminal, terminal, wireless communication device, user agent, or user apparatus. The terminal device in the embodiments of the disclosure may be a device that provides voice and/or data connectivity to a user, and may be used for connecting people, objects, and machines, for example, a handheld device with a wireless connection function, a vehicle-mounted device, etc. The terminal device in the embodiments of the disclosure may be a mobile phone, a tablet computer (Pad), a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. Optionally, a UE may act as a base station. For example, a UE may act as a scheduling entity that provides sidelink signals between UEs in vehicle-to-everything (V2X) or device-to-device (D2D) communications. For instance, a cellular phone and a car communicate with each other using sidelink signals. A cellular phone and a smart home device communicate with each other without relaying communication signals through a base station.

The network device in the embodiments of the disclosure may be a device for communicating with a terminal device. The network device may also include an access network device. The access network device may provide communication coverage for a specific geographical area and may communicate with a terminal device 120 located within the coverage area. The access network device may also be referred to as a radio access network device or a base station, etc. The access network device in the embodiments of the disclosure may refer to a radio access network (RAN) node (or device) that accesses a terminal device to a wireless network. The access network device may broadly cover various names as follows, or may be replaced with the following names, for example: NodeB, evolved NodeB (eNB), next generation NodeB (gNB), relay station, access point, transmitting and receiving point (TRP), transmitting point (TP), master eNB (MeNB), secondary eNB (SeNB), multi-standard radio (MSR) node, home base station, network controller, access node, radio node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, a modem, or a chip provided in the aforementioned device or apparatus. The base station may also be a mobile switching center and a device that assumes a base station function in D2D, V2X, machine-to-machine (M2M) communication, a network-side device in a 6G network, a device that assumes a base station function in a future communication system, etc. The base station may support networks of the same or different access technologies. The embodiments of the disclosure do not limit the specific technology and specific device form adopted by the access network device.

The base station may be fixed or mobile. For example, a helicopter or a drone may be configured to act as a mobile base station, and one or more cells may move according to the location of the mobile base station. In other examples, a helicopter or a drone may be configured to act as a device that communicates with another base station.

The communication devices involved in the wireless communication system may include not only access network devices and terminal devices but also core network elements. The core network element may be implemented by a device, i.e., the core network element is a core network device. It can be understood that the core network device may also be a type of network device.

The core network element in the embodiments of the disclosure may include an element that processes and forwards user signaling and data. For example, the core network device may include core network devices such as a core access and mobility management function (AMF), a session management function (SMF), a user plane gateway, and a location management function (LMF). The user plane gateway may be a server having functions such as mobility management, routing, and forwarding of user plane data, and is generally located on the network side, such as a serving gateway (SGW), a packet data network gateway (PGW), or a user plane function entity (UPF). Of course, the core network may also include other network elements, which are not listed here.

In some deployments, the network device in the embodiments of the disclosure may refer to a CU or a DU, or the network device includes a CU and a DU. A gNB may also include an AAU.

The network device and the terminal device may be deployed on land, including indoors or outdoors, handheld or vehicle-mounted; may also be deployed on water; and may also be deployed on airborne airplanes, balloons, and satellites. The embodiments of the disclosure do not limit the scenarios where the network device and the terminal device are located.

It should be understood that all or part of the functions of the communication device in the disclosure may also be implemented by software functions running on hardware, or by virtualized functions instantiated on a platform (e.g., a cloud platform).

### Discontinuous Reception (DRX)

To reduce power consumption of a terminal, some communication systems (e.g., LTE and NR systems) have proposed a DRX mechanism. The DRX mechanism allows a terminal, when there is no data to receive, to not keep a receiver always on but instead enter a discontinuous reception state, thereby achieving power saving. The DRX mechanism includes configuring a DRX cycle for the terminal. One DRX cycle consists of an "on duration" and an "opportunity for DRX". During the on duration, the terminal monitors and receives downlink channels and signals including a PDCCH. During the opportunity for DRX, the terminal does not receive downlink channels and signals such as a PDCCH to reduce power consumption.

In the evolution of communication systems, higher requirements for terminal power saving have been proposed. For some DRX mechanisms, during each on duration, the terminal needs to continuously detect the PDCCH to determine whether a network device schedules data to be sent to the terminal. However, for most terminals, although there may be no need to receive data transmission for a long period of time, they still need to wake up periodically to monitor possible downlink transmissions. For the power saving manner of such terminals, there is room for further optimization.

Regarding the above problem, in some communication standards (e.g., 3GPP Release 16 standard), a power saving signal is introduced. The power saving signal can achieve further power saving for a terminal device in a radio resource control (RRC) connected state (RRC_CONNECTED). The power saving signal can be used in combination with the DRX mechanism. For example, before entering a DRX on duration, the terminal may first determine, based on an indication of the power saving signal, whether it needs to receive data during the DRX on duration. When there is data transmission for the terminal in one DRX cycle, the power saving signal "wakes up" the terminal, and accordingly, the terminal monitors the PDCCH during the DRX on duration. Conversely, when there is no data transmission for the terminal in one DRX cycle, the power saving signal does not "wake up" the terminal, and accordingly, the terminal does not need to monitor the PDCCH during the DRX on duration. In this DRX mechanism combined with the power saving signal, if the power saving signal does not wake up the terminal in one DRX cycle, the terminal does not need to monitor the PDCCH even during the DRX on duration, thereby achieving power saving.

In some communication standards (e.g., 3GPP Release 17 standard), a terminal power saving enhancement project is further established. The terminal power saving enhancement project further standardizes power saving for terminals in an RRC idle state (RRC_IDLE) and an RRC inactive state (RRC_INACTIVE). The power consumption of terminals in the RRC_IDLE and RRC_INACTIVE states mainly comes from periodic discontinuous reception paging, which includes the power consumption of performing time-frequency synchronization recovery and automatic gain control (AGC) before a PO arrives and detecting a paging PDCCH during the PO.

To reduce power consumption during the process of receiving paging, related standards have introduced a power saving signal for paging reception. The power saving signal may be referred to as a PEI (paging early indication). The PEI may be used to indicate, before a PO of a terminal arrives, whether the terminal needs to receive paging at the PO. That is, the PEI may be used to indicate whether to "wake up" the terminal before the PO of the terminal arrives.

### PEI (Paging Early Indication)

The following describes technologies related to PEI by taking the PEI design in the 3GPP Release 17 standard as an example.

### PEI Occasion (PEI-O)

A PEI-O is a set of multiple physical downlink control channel (PDCCH) monitoring occasions.

In some embodiments, when nrofPDCCH-MonitoringOccasionPerSSB-InPO is not configured, the PEI-O may be a set of S consecutive PDCCH monitoring occasions. Here, S is the number of actually transmitted SSBs determined according to ssb-PositionsInBurst in system information broadcast 1 (SIB1). In PEI-O, the quasi co-location (QCL) of the K-th PEI PDCCH monitoring occasion may be the same as that of the K-th PDCCH monitoring occasion for paging in the PO (the reference for QCL is an SSB).

In an unlicensed spectrum, the PEI-O may be a set of (S*X) consecutive PDCCH monitoring occasions. Here, S is the number of actually transmitted SSBs determined according to ssb-PositionsInBurst in SIB1. If nrofPDCCH-MonitoringOccasionPerSSB-InPO is configured, X takes the configured value; otherwise, X=1. The (x*S+K)-th PDCCH monitoring occasion in the PEI-O corresponds to the K-th transmitted SSB, where x=0, 1, ..., X-1, K=1, 2..., S. If X>1, when a terminal detects a PEI in the PEI-O, the terminal does not need to continue monitoring subsequent monitoring occasions associated with the PEI-O.

### Mapping between PEI and PO

A network device may configure multiple POs for each paging frame (PF). On the one hand, if each PEI corresponds to one PO, there would be a large number of independent PEIs, which would increase PEI overhead. On the other hand, if each PEI corresponds to one PO, then the PEIs corresponding to these POs may overlap in the time domain. In the 3GPP Release 15/16 standards, one wake-up signal (WUS) may be associated with one PO or multiple POs. In the PEI design, in order to reduce PEI overhead and avoid PEI overlap, a mapping mechanism similar to that of the WUS in the 3GPP Release 15/16 standards was finally determined, i.e., one PEI may be associated with one PO or multiple POs.

In some embodiments, one PEI is supported to be associated with POnumPerPEI POs. As illustrated in FIG. 2, POnumPerPEI may be 4. That is, in FIG. 2, one PEI may be associated with 4 POs.

Optionally, the POnumPerPEI POs associated with one PEI may be located in one or more PFs, and the maximum number of PFs associated with one PEI is 2.

Optionally, POnumPerPEI is a factor of N×Nₛ. Here, N may be the number of paging frames in a paging cycle, and Nₛ may be the number of POs in a paging frame. POnumPerPEI may be configured through SIB, and its value range may be {1, 2, 4, 8}.

### Location of PEI-O

A terminal may determine the location of the PEI-O corresponding to a PO based on a reference point and an offset value (from the reference point to the first PDCCH monitoring occasion of the PEI-O). The following continues the description with reference to FIG. 2. The location of the PEI-O may be determined through steps 1 and 2.

Step 1: Determine a reference frame, and take the start point of the reference frame as the reference point.

The reference frame may be determined based on the earliest PF among all PFs associated with the PEI (in a case where one PEI is associated with multiple POs, the associated POs may be located in different PFs) and a frame-level offset value.

The frame-level offset value from the earliest PF among all PFs associated with the PEI to the reference frame may be configured through SIB.

Step 2: Determine the location of the earliest PDCCH monitoring occasion in the PEI-O based on the reference point and a symbol-level offset value.

The symbol-level offset value from the reference point to the earliest PDCCH monitoring occasion in the PEI-O may be configured through SIB. Exemplarily, the symbol-level offset value may be provided by firstPDCCH-MonitoringOccasionOfPEI-O.

### LP-WUS/WUR

Considering further power saving processing of a terminal, some research projects (e.g., the 3GPP Release 18) introduce a low power-wake up receiver (LP-WUR) and design a corresponding low power-wake up signal (LP-WUS). Specifically, when LP-WUR is used for monitoring the wake-up signal, a main receiver (MR) may be in an extremely low-power state (e.g., an ultra deep sleep state), thereby achieving overall power saving of the terminal. The LP-WUR may monitor the LP-WUS, and upon receiving the LP-WUS from a network device, the LP-WUR may wake up the main receiver.

The following describes by taking the research on LP-WUS/WUR by the 3GPP RAN1 working group as an example.

During the research on LP-WUS/WUR, the RAN1 working group reached a preliminary consensus on the accuracy of an LP-WUR oscillator, considering the following four options.

Option 1: maximum frequency error of the oscillator is 200 ppm, and frequency drift of the oscillator is 0.1 ppm/s.

Option 2: maximum frequency error of the oscillator is 50 ppm, and frequency drift of the oscillator is 0.1 ppm/s.

Option 3: maximum frequency error of the oscillator is 10 ppm, and frequency drift of the oscillator is 0.05 ppm/s.

Option 4: maximum frequency error of the oscillator is 5 ppm, and frequency drift of the oscillator is 0.05 ppm/s.

The maximum frequency error of a real-time clock (RTC) of the LP-WUR is considered to be 20 ppm, and the frequency drift is 0.1 ppm/s.

In 3GPP Release 18, LP-WUS/WUR was studied, and a study report TR 38.869 was output. In 3GPP Release 19, standardization of LP-WUS/WUR was determined. The following describes some content and objectives of standardization in Release 19.

Release 19 standardizes a common design of LP-WUS that can be applied to both IDLE/INACTIVE state and CONNECTED state (RAN1, RAN4). The standardization is based on an LP-WUS signal of OOK (OOK-1 and/or OOK-4), and an orthogonal frequency division multiplexing (OFDM) sequence may be superimposed on an OOK symbol. The design of the LP-WUS should ensure that in the IDLE/INACTIVE state, regardless of which receiver design the LP-WUR adopts, the LP-WUS conveys the same information. Meanwhile, the OFDM sequence may also carry information. The LP-WUS may support at least a duty-cycled monitoring scheme.

First, for the IDLE/INACTIVE state, the process and configuration for LP-WUS triggering of monitoring paging messages are standardized, at least including: "configuration", "subgroup", and "conditions for entering/exiting LP-WUS monitoring" (RAN2, RAN1, RAN3, RAN4).

In addition, for the IDLE/INACTIVE state, an LP-SS with a period of Y ms is standardized for the LP-WUR, which can be used for synchronization and/or radio resource management (RRM) measurement of a serving cell (RAN1, RAN4). The LP-SS may be based on an OOK-1 and/or OOK-4 waveform, and an OFDM sequence may or may not be superimposed on the OOK symbol. In the work item (WI), whether to superimpose an OFDM sequence on the LP-SS is selected.

It should be noted that for an LP-WUR that can receive a primary synchronization signal (PSS)/secondary synchronization signal (SSS) in related technologies, the PSS/SSS in related technologies may be used instead of the LP-SS for synchronization and RRM measurement.

It should be noted that the value of Y needs to be determined in the WI phase. For example, an initial value of Y can be 320 ms.

For the measurement of the serving cell and neighboring cells by the main receiver of the terminal, further RRM relaxation is standardized. RRM measurement of the serving cell of the terminal device may be offloaded from the MR to the LP-WUR for measurement, including necessary condition design (RAN4, RAN2).

Second, for the CONNECTED state, the process for LP-WUS triggering the main receiver of the terminal to monitor the PDCCH needs to be standardized, including the activation and deactivation processes of the LP-WUS (RAN2, RAN1).

It should be noted that in the CONNECTED state, the main receiver of the terminal does not enter the ultra deep sleep state, and radio resources (RR)/radio link monitoring (RLM)/bidirectional forwarding detection (BFD)/channel state information (CSI) measurement of the terminal are performed by the main receiver.

It should be noted that the coverage performance of LP-WUS and LP-SS may be close to the coverage performance of physical uplink shared channel (PUSCH) message 3 (msg3).

### SSB (Synchronization Signal/PBCH Block)

The following describes an SSB by taking an NR system as an example.

### Structure of SSB

In the NR system, downlink synchronization is achieved by receiving a PSS and an SSS in an SSB. FIG. 3 is an example diagram of a structure of an SSB.

In the time domain, one SSB may occupy 4 OFDM symbols.

In the frequency domain, one SSB may occupy 20 RBs.

As illustrated in FIG. 3, subcarrier numbers are 0 to 239. The PSS is located on the middle 127 subcarriers (SCs) of symbol #0, and the SSS is located on the middle 127 SCs of symbol #2. To protect the PSS and the SSS, multiple carriers are respectively set to 0.

As illustrated in FIG. 3, in the SSB, a physical broadcast channel (PBCH) may occupy all of symbols #1 and #3, and symbol #2 excluding the SSS and a guard band. On symbols #1 and #3, excluding demodulation reference symbols (DMRSs), the remaining 2*(240-60)=360 subcarriers are used for PBCH transmission. On symbol #2, excluding the DMRS, the number of SCs is (240-127-8-9)*3/4=72 carriers. Therefore, the PBCH has a total of 432 subcarriers.

As illustrated in FIG. 3, a DMRS is inserted and transmitted in the PBCH, and its starting position in the SSB is determined by a physical cell ID modulo 4.

### Transmission of SSB

SSBs may be transmitted in a TDD manner, in which the same SSB is transmitted to different directions in the form of beams so that terminal devices in various directions can receive the SSBs. A series of SSBs transmitted by a network device may be referred to as a synchronization signal block burst set (SS BURST SET).

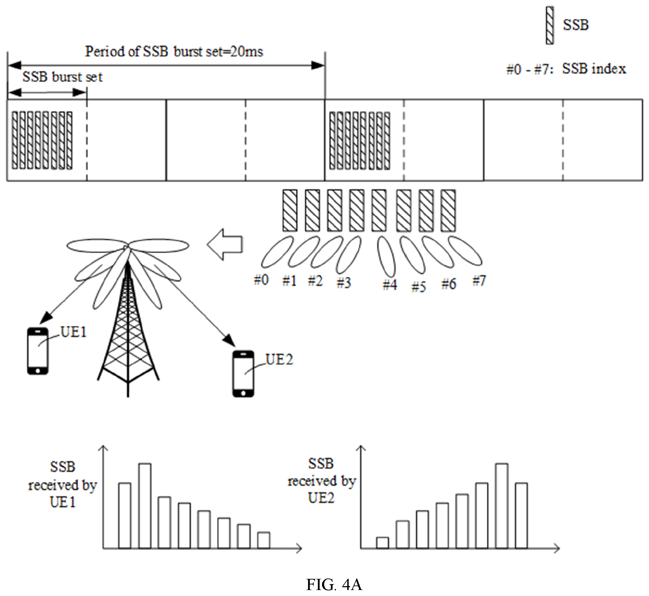

FIG. 4A is an example diagram of a scenario of transmitting SSBs. As illustrated in FIG. 4A, within a half-frame of 5 ms, a network device transmits 8 SSBs with SSB indexes #0 to #7 respectively through 8 beams to cover different directions. It can be seen from FIG. 4A that these 8 SSBs may form an SS SET.

A terminal device may receive multiple SSBs with different signal strengths. The terminal device may select, among the received SSBs, a beam corresponding to an SSB with the strongest signal strength as its own SSB beam.

As illustrated in FIG. 4A, UE1 and UE2 receive 8 SSBs with different signal strengths. For the SSBs received by UE1, SSB#1 has the strongest signal strength. Therefore, the beam corresponding to SSB#1 may serve as the SSB beam of UE1. For the SSBs received by UE2, SSB#6 has the strongest signal strength. Therefore, the beam corresponding to SSB#6 may serve as the SSB beam of UE2.

The period of the SS BURST SET may refer to the time interval at which the SS BURST SET repeatedly appears. Exemplarily, the period may be 20 ms by default. In the scenario illustrated in FIG. 4A, the period of the SS BURST SET is 20 ms. In the ServingCellConfigCommon information element (IE) of TS 38.331, it can be seen that the value range of the SSB period (ssb-periodicityServingCell) is ENUMERATED {ms5, ms10, ms20, ms40, ms80, ms160, spare2, spare1}.

Within 5 ms, the configuration of SSBs in the time domain may be as illustrated in Table 1. Table 1 provides the starting OFDM symbol positions of SSBs within 5 ms.

**Table 1**

| Carrier Spacing | **S**ymbol(s) occupied by SSB | *f* ≤ 3*GH*z | ***3**GHz* < *f* ≤ 6*GHz* |
|---|---|---|---|
| Case A: 15KHz | {2, 8} +14n | n = 0, 1 | n = 0, 1, 2, 3 |
| | | **S**ymbol(s) occupied = 2, 8, 16, 22 | **S**ymbol(s) occupied= 2, 8, 16, 22, 30, 36, 44, 50 |
| Case B: 30KHz | {4, 8, 16, 20} +28n | n = 0 | n = 0, 1 |
| | | **S**ymbol(s) occupied = 4, 8, 16, 20 | **S**ymbol(s) occupied= 4, 8, 16, 20, 32, 36, 44, 48 |
| Case C: 30KHz | {2, 8} +14n | n = 0, 1 | n = 0, 1, 2, 3 |
| | | **S**ymbol(s) occupied = 2, 8, 16, 22 | **S**ymbol(s) occupied= 2, 8, 16, 22, 30, 36, 44, 50 |
| Carrier Spacing | Symbol(s) occupied by SSB (s) | *f > 6GHz* | |
| Case D: 120KHz | {4, 8, 16, 20} +28n | n = 0, 1, 2, 3, 5, 6, 7, 8, 10, 11, 12, 13, 15, 16, 17, 18 | |
| | | Symbol(s) occupied = 4, 8, 16, 20, 32, 36, 44, ···, 508, 512, 520, 524 | |
| Case E: 240KHz | {8, 12, 16, 20, 32, 36, 40, 44} +56n | n = 0, 1, 2, 3, 5, 6, 7, 8 | |
| | | Symbol(s) occupied = 8, 12, 16, 20, 32, 36, 40, ···, 484, 488, 492 | |

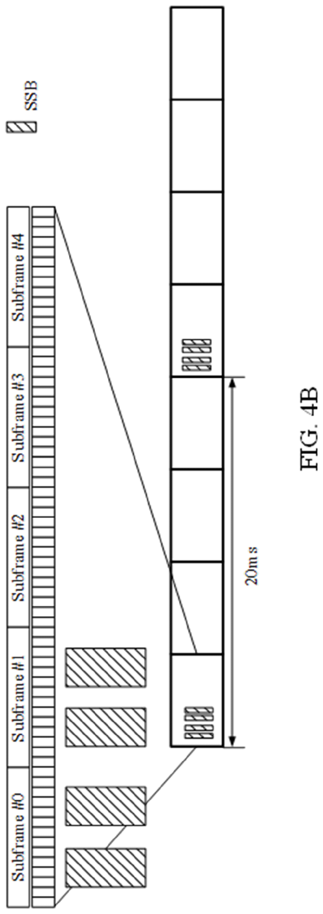

FIG. 4B is an example diagram of SSB distribution in Case A when *f* ≤ 3*GHz*. In FIG. 4B, the SSB period is 20 ms.

It should be noted that not all SSBs within the SS BURST SET must be transmitted.

Exemplarily, in the ServingCellConfigCommon IE of TS 38.331, the indexes of actually transmitted SSBs are indicated by an ssb-PositionsInBurst IE. An example of the ServingCellConfigCommon IE is illustrated below.

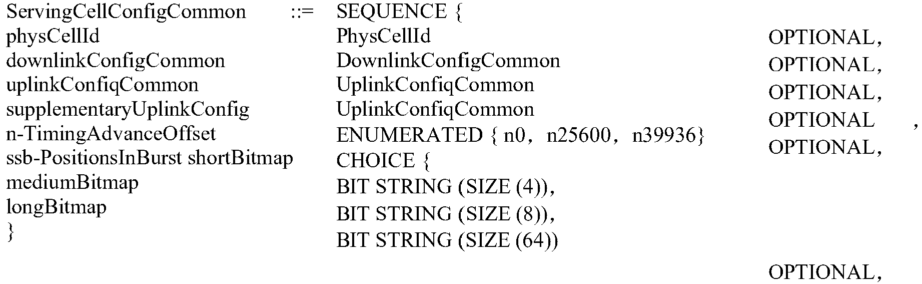

Among them, shortBitmap, mediumBitmap, and longBitmap can respectively indicate the indexes of actually transmitted SSBs in the cases of f<3 GHz, 3 GHz<f<6 GHz, and f>6 GHz. shortBitmap, mediumBitmap, and longBitmap use a bitmap format to indicate whether the corresponding SSB index is transmitted. For example, 0 may indicate not transmitted, and 1 may indicate transmitted.

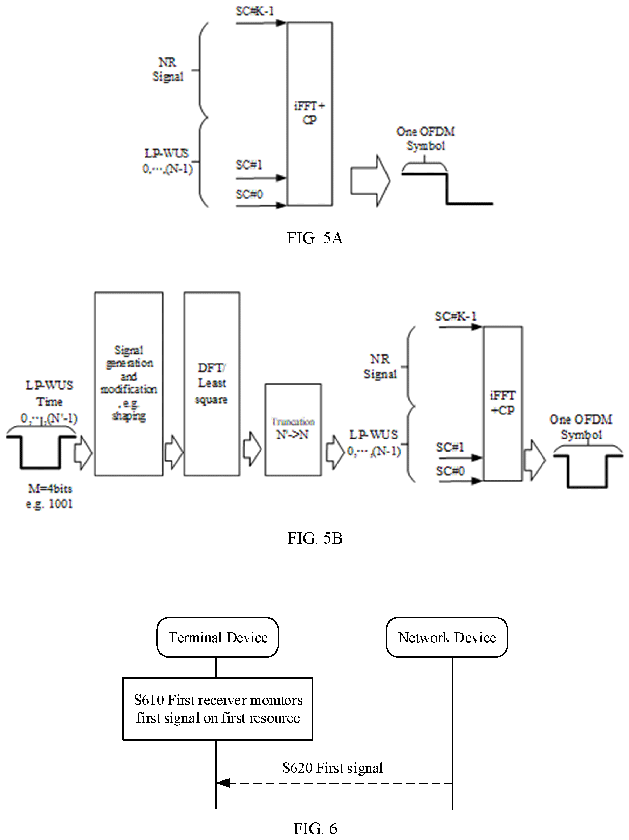

FIG. 6 is a schematic flowchart of a wireless communication method provided by an embodiment of the disclosure. The method illustrated in FIG. 6 may be executed by a terminal device and a network device. The method illustrated in FIG. 6 may include step S610.

Step S610: A first receiver of a terminal device monitors a first signal on a first resource.

The first signal may be used to wake up a second receiver. Exemplarily, the first receiver may determine whether to wake up the second receiver according to an indication of the first signal. For example, in response to the first receiver receiving the first signal, the first receiver may wake up the second receiver. For another example, in a case where the first receiver does not receive the first signal, the first receiver may not wake up the second receiver, i.e., does not change a working state of the second receiver. For another example, in response to the first receiver receiving the first signal and the first signal indicating to wake up the second receiver, the first receiver may wake up the second receiver. For another example, in a case where the first receiver receives the first signal and the first signal indicates not to wake up the second receiver, the first receiver may not wake up the second receiver.

The first signal may be sent to the terminal device, or may be sent to a terminal device group to which the terminal device belongs. In other words, the first receiver of the terminal device may receive the first signal sent to the terminal device, or may receive the first signal sent to the terminal device group to which the terminal device belongs, so as to wake up the second receiver based on the first signal.

The first receiver may continuously monitor the first signal. Alternatively, the first receiver may discontinuously monitor the first signal. For example, discontinuous monitoring may be performed in a duty-cycled manner.

During a process in which the first receiver monitors the first signal, the second receiver may be in a low-power state. The low-power state may be, for example, an ultra deep sleep state. It can be understood that, in the low-power state, the second receiver may turn off or reduce some functions (e.g., not receiving part or all of signals), thereby reducing power consumption. In a case where the first receiver wakes up the second receiver, the second receiver may return to a working state. In the working state, the second receiver may turn on or restore part or all of functions (e.g., may receive part or all of signals), thereby achieving normal communication.

Exemplarily, the first receiver may include a low power receiver (LR). The LR may be, for example, an LP-WUR. The second receiver may include an MR.

The first signal may include an LP-WUS. For the description of the LP-WUS, refer to the above description.

In some embodiments, the first signal may be modulated by an OOK scheme. For example, the first signal may be based on an OOK-1 and/or OOK-4 waveform. An OFDM sequence may or may not be superimposed on an OOK symbol.

FIG. 5A and FIG. 5B respectively show example waveforms of OOK-1 and OOK-4 by taking the first signal including an LP-WUS as an example.

As illustrated in FIG. 5A, in the waveform of OOK-1, each OFDM symbol may carry 1 bit of information. That is, a time domain length of one OFDM symbol may carry one OOK symbol. Subcarrier (SC) setting of the LP-WUS signal may satisfy: OOK="1": modulation is performed on all LP-WUS subcarriers to transmit information of bit "1", and a corresponding symbol may also be referred to as an "OOK-on" symbol; OOK="0": power on all LP-WUS subcarriers is set to 0 to transmit information of bit "0", and a corresponding symbol may also be referred to as an "OOK-off" symbol.

As illustrated in FIG. 5B, in the waveform of OOK-4, each OFDM symbol carries M bits of information, i.e., a time domain length of one OFDM symbol carries M OOK symbols. Here, M may be a positive integer. For example, in FIG. 5B, M may be 4 bits. The value of M may be, for example, 1001.

In FIG. 5B, N subcarriers (SCs) of OOK-4 may be generated by a transformation (e.g., based on DFT or least squares). N' samples are generated from M bits (N' samples are generated from M-bits). Signal modification may or may not be used. Truncation or other additional modification may or may not be used; if not used, N is the same as N'; N' may be the same as K. Here, K may be the total number of subcarriers.

The first resource can be used for transmitting the first signal. In other words, if transmission of the first signal is required, the first signal may be carried on the first resource.

In some embodiments, the method illustrated in FIG. 6 may further include step S620, in which a network device may send the first signal to the first receiver of the terminal device. The first signal can be transmitted on the first resource.

It should be noted that the disclosure does not limit the order of performing step S610 and step S620. For example, step S610 and step S620 may be performed simultaneously.

It can be seen from the above that the first resource may carry the first signal or may not carry the first signal. Therefore, the first receiver of the terminal device may or may not receive the first signal on the first resource.

The first resource may satisfy a first rule. For the terminal device, the terminal device may determine the first resource according to the first rule, so as to monitor the first signal on an appropriate resource, thereby accurately receiving the first signal sent by the network device. For the network device, the network device may determine the first resource according to the first rule, so as to send the first signal on an appropriate resource, so that the terminal device can accurately receive the first signal.

In some embodiments, the first rule may be related to a second resource. For ease of understanding, the second resource is described below first.

The first receiver may monitor a synchronization signal on the second resource. In other words, the second resource can be used for transmitting the synchronization signal.

Optionally, based on the synchronization signal, the first receiver of the terminal device may achieve synchronization. Due to the accuracy of the oscillator of the first receiver, a time-frequency offset may occur as monitoring of the first signal proceeds. Therefore, by monitoring the synchronization signal, the time-frequency offset may be eliminated.

Optionally, the terminal device may perform measurement through the synchronization signal. The measurement may include, for example, RRM measurement.

The first receiver may monitor the synchronization signal before monitoring the first signal. For example, after the first receiver monitors the synchronization signal for synchronization and/or RRM measurement, the first receiver may monitor the first signal. It can be understood that, after synchronization is achieved by monitoring the synchronization signal, the time-frequency offset may be eliminated, so that the first receiver can accurately monitor the first signal and then wake up the second receiver at an appropriate time.

In some embodiments, the synchronization signal may be modulated by an OOK scheme. For example, the synchronization signal may be based on an OOK-1 and/or OOK-4 waveform. An OFDM sequence may or may not be superimposed on an OOK symbol.

In some embodiments, the synchronization signal may include an LP-SS (low power synchronization signal). For example, in a case where the first receiver includes an LR, the synchronization signal may include an LP-SS. For the description of the LP-SS, refer to the above description.

In some embodiments, the synchronization signal may include one or more of: a primary synchronization signal (PSS), a secondary synchronization signal (SSS), and a synchronization signal block (SSB). The modulation scheme of the PSS/SSS is different from that of the LP-SS. For example, some high-capability LRs may have the capability to monitor one or more of PSS, SSS, and SSB. In a case where the first receiver includes a high-capability LR, the synchronization signal may include one or more of: PSS, SSS, SSB, and LP-SS.

Exemplarily, LRs may have different design schemes. At least two categories of LR receiver designs may exist. A category 1 LR can only receive an LP-SS for synchronization and/or measurement, and does not have the capability to receive and detect one or more of PSS, SSS, and SSB. A category 2 LR has the capability to receive and detect one or more of PSS, SSS, and SSB, i.e., can perform synchronization and/or measurement by receiving one or more of PSS, SSS, and SSB. In a case where the first receiver includes a category 1 LR, the synchronization signal monitored by the first receiver may include the LP-SS. In a case where the first receiver includes a category 2 LR, the synchronization signal monitored by the first receiver may include one or more of: PSS, SSS, SSB, and LP-SS.

The first rule related to the second resource is described below.

In some embodiments, the first resource may include a first frequency domain resource. The second resource may include a second frequency domain resource. The first frequency domain resource and the second frequency domain resource may satisfy the first rule. That is, the first rule may be related to the first frequency domain resource and the second frequency domain resource. For example, based on the first rule and the first frequency domain resource, the second frequency domain resource may be determined. For another example, based on the first rule and the second frequency domain resource, the first frequency domain resource may be determined.

As a possible implementation, the first frequency domain resource and the second frequency domain resource may be located in a same frequency domain resource set.

Exemplarily, the frequency domain resource set may include a bandwidth part (BWP). In this case, the first frequency domain resource and the second frequency domain resource may be located in a same BWP. Alternatively, the frequency domain resource set may include a frequency domain resource actually used by a signal. In this case, the same frequency domain resource set may be a frequency domain resource in the BWP to which the first resource belongs that does not include a guard period, or a frequency domain resource actually used by the first signal/synchronization signal in the BWP.

It should be noted that, in a case where the first frequency domain resource and the second frequency domain resource are located in the same frequency domain resource set, the same frequency domain resource set may be configured by a network device. In addition, the same frequency domain resource set may be a dedicated frequency domain resource set allocated for monitoring by the first receiver.

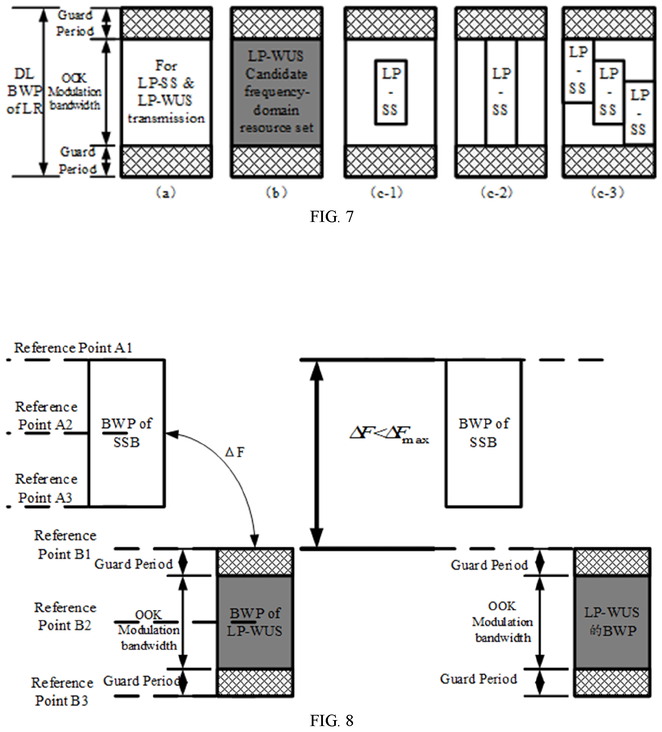

FIG. 7 illustrates example diagrams of multiple frequency domain resource sets. In FIG. 7, the first signal is an LP-WUS, the synchronization signal is an LP-SS, and the frequency domain resource set is a downlink (DL) BWP. Both the first frequency domain resource and the second frequency domain resource may be located in the DL BWP.

As illustrated in FIG. 7, in (b), the DL BWP may include one candidate frequency domain resource set for LP-WUS.

As illustrated in FIG. 7, the DL BWP may include one or more candidate frequency domain resource sets for the LP-SS. In (c-1) or (c-2), the DL BWP includes one candidate resource set for LP-SS. In (c-3), the DL BWP includes three candidate frequency domain resource sets for LP-SS.

It can be understood that, in a case where the first frequency domain resource set and the second frequency domain resource set are located in the same frequency domain resource set, the same frequency domain resource set may be shared by the first signal and the synchronization signal. That is, both the first signal and the synchronization signal may be carried by the same frequency domain resource set.

Optionally, the above-mentioned same frequency domain resource set may include a guard period. The guard period cannot be used for carrying the first signal and/or the synchronization signal. Alternatively, the guard period cannot be used for carrying any valid signal. The guard period may be used to separate frequency domain resources carrying the first signal and/or the synchronization signal from other frequency domain resources. The guard period may be distributed on both sides within the frequency domain resource set. Continuing to refer to FIG. 7, it can be seen from FIG. 7 that the DL BWP may include guard periods located on both sides.

Optionally, the above-mentioned same frequency domain resource set may be a dedicated frequency domain resource set for OOK modulation. The dedicated frequency domain resource set for OOK modulation may include an OOK modulation bandwidth and guard periods uniformly distributed on both sides.

In some embodiments, a frequency domain resource set for transmitting the first signal and/or the synchronization signal is required to include a guard period. For example, in a case where the first signal is modulated by OOK, a BWP for transmitting the first signal is required to include a guard period. For another example, in a case where the synchronization signal is modulated by OOK, a BWP for transmitting the synchronization signal is required to include a guard period. In a case where both the frequency domain resource set for transmitting the first signal and the frequency domain resource set for transmitting the synchronization signal are required to include guard periods, the fact that the first frequency domain resource corresponding to the first signal and the second frequency domain resource corresponding to the synchronization signal are located in the same frequency domain resource set can reduce the configuration of guard periods. Taking the example where the frequency domain resource set includes guard periods on both sides, if the first frequency domain resource and the second frequency domain resource are located in two different frequency domain resource sets, guard periods need to be respectively configured on both sides of these two frequency domain resource sets, resulting in a total of four guard periods. If the first frequency domain resource and the second frequency domain resource are located in the same frequency domain resource set, it is only necessary to configure guard periods on both sides of the same frequency domain resource set, thereby reducing the total number of guard periods, thus saving frequency domain resources and allowing more frequency domain resources to be used for transmitting valid signals.

Optionally, in a case where the first frequency domain resource and the second frequency domain resource are located in the same frequency domain resource set, the first rule may include: the first frequency domain resource has a same size as the second frequency domain resource, and the first frequency domain resource has a same position as the second frequency domain resource. In other words, the first frequency domain resource and the second frequency domain resource are completely identical. That is, the first signal and the synchronization signal use exactly the same frequency domain resource. Continuing to refer to FIG. 7, the second frequency domain resource (the frequency domain resource carrying the LP-SS) illustrated in (c-2) and the first frequency domain resource (the frequency domain resource carrying the LP-WUS) illustrated in (b) are completely identical in the frequency domain.

Optionally, in a case where the first frequency domain resource and the second frequency domain resource are located in the same frequency domain resource set, the first rule may include: a center (i.e., a center frequency) of the first frequency domain resource is aligned (or identical) with a center of the second frequency domain resource, and the first frequency domain resource has a size different from that of the second frequency domain resource. Exemplarily, the first frequency domain resource may be larger than the second frequency domain resource. Continuing to refer to FIG. 7, the second frequency domain resource (the frequency domain resource carrying the LP-SS) illustrated in (c-1) is smaller than the first frequency domain resource (the frequency domain resource carrying the LP-WUS) illustrated in (b), and the center of the second frequency domain resource illustrated in (c-1) is aligned with the center of the first frequency domain resource illustrated in (b).

Optionally, in a case where the first frequency domain resource and the second frequency domain resource are located in the same frequency domain resource set, the first rule may include: the center of the first frequency domain resource and the center of the second frequency domain resource may not be aligned.

In some embodiments, the second frequency domain resource may be one or more of multiple candidate synchronization signal frequency domain resources in the same frequency domain resource set, and the multiple candidate synchronization signal frequency domain resources satisfy one of: the multiple candidate synchronization signal frequency domain resources do not overlap with each other; the multiple candidate synchronization signal frequency domain resources may overlap with each other; centers of part or all of the multiple candidate synchronization signal frequency domain resources are aligned with the center of the first frequency domain resource.

It should be noted that any one of the multiple candidate synchronization signal frequency domain resources may be smaller than the first frequency domain resource.

It should be noted that overlapping or non-overlapping of the multiple candidate synchronization signal frequency domain resources is with respect to the frequency domain, and no limitation is imposed on overlapping in the time domain. The multiple candidate synchronization signal frequency domain resources may include a first candidate frequency domain resource and a second candidate frequency domain resource. That the first candidate frequency domain resource and the second candidate frequency domain resource overlap may include: in the frequency domain, the first candidate frequency domain resource and the second candidate frequency domain resource overlap; in the time domain, the first candidate frequency domain resource and the second candidate frequency domain resource may coincide or may not overlap. That the first candidate frequency domain resource and the second candidate frequency domain resource do not overlap may include: in the frequency domain, the first candidate frequency domain resource and the second candidate frequency domain resource do not overlap; in the time domain, the first candidate frequency domain resource and the second candidate frequency domain resource may overlap or may not overlap.

It should be noted that overlapping of the first candidate frequency domain resource and the second candidate frequency domain resource may mean that part or all of the first candidate frequency domain resource is identical to part or all of the second candidate frequency domain resource. Non-overlapping of the first candidate frequency domain resource and the second candidate frequency domain resource may mean that any frequency domain resource in the first candidate frequency domain resource is different from any frequency domain resource in the second candidate frequency domain resource.

It should be noted that that the multiple candidate synchronization signal frequency domain resources do not overlap with each other may include: any two of the multiple candidate synchronization signal frequency domain resources do not overlap with each other in the frequency domain. For another example, that the multiple candidate synchronization signal frequency domain resources may overlap with each other may include: any two of the multiple candidate synchronization signal frequency domain resources may or may not overlap with each other in the frequency domain.

It should be noted that, in a case where the synchronization signal includes an LP-SS, the candidate synchronization signal frequency domain resources may also be referred to as candidate frequency domain resource sets for the LP-SS.

Continuing to refer to FIG. 7, in (c-2), the DL BWP includes three candidate frequency domain resource sets for the LP-SS. The center frequencies of these three candidate frequency domain resource sets for the LP-SS are not aligned. Moreover, in the frequency domain, these three candidate frequency domain resource sets for the LP-SS overlap. Compared with (b), the center frequencies of two of the three candidate frequency domain resource sets for LP-SS are not aligned with the center frequency of the candidate frequency domain resource set for LP-WUS.

In some embodiments, the synchronization signal may be transmitted using frequency hopping.

In some embodiments, the first frequency domain resource may be located in a first frequency domain resource set, and the second frequency domain resource may be located in a second frequency domain resource set. Exemplarily, in a case where the synchronization signal includes PSS/SSS/SSB, the first frequency domain resource may be located in the first frequency domain resource set, and the second frequency domain resource may be located in the second frequency domain resource set.

In an optional implementation, a network device may respectively configure the first frequency domain resource set and the second frequency domain resource set. The first frequency domain resource set and the second frequency domain resource set configured by the network device may satisfy the first rule.

The first frequency domain resource set may include a guard period. The guard period may be distributed on both sides within the first frequency domain resource set. For a detailed description of the guard period, refer to the above description, which is not repeated here.

The first frequency domain resource set may include an OOK modulation bandwidth, i.e., a bandwidth occupied by a signal modulated by OOK. The guard period may be located on both sides outside the OOK modulation bandwidth, so that the OOK-modulated signal is separated from other frequency domain resources.

As described above, the frequency domain resource set may include a BWP. Based on this, the first frequency domain resource set may be a BWP to which the first resource belongs, and the second frequency domain resource set may be a BWP to which the second resource belongs. Alternatively, the frequency domain resource set may include a frequency domain resource actually used by a signal. Exemplarily, the first frequency domain resource set may be a frequency domain resource in the BWP to which the first resource belongs that does not include a guard period. The second frequency domain resource set may be a frequency domain resource actually used by the synchronization signal. Taking the synchronization signal including an SSB as an example, the second frequency domain resource set may be 20 PRBs.

In an optional implementation, the first rule may include: the first frequency domain resource set and the second frequency domain resource set may have an association relationship. For example, the network device may configure the first frequency domain resource set (and may not configure the second frequency domain resource set). Based on the first frequency domain resource set and the association relationship, the second frequency domain resource set may be determined. For another example, the network device may configure the second frequency domain resource set (and may not configure the first frequency domain resource set). Based on the second frequency domain resource set and the association relationship, the first frequency domain resource set may be determined.

In some embodiments, the association relationship between the first frequency domain resource set and the second frequency domain resource set may be represented by a frequency domain interval (or frequency domain offset) therebetween. For example, a position of the first frequency domain resource set may be determined by: a position of the second frequency domain resource set; and the frequency domain interval between the first frequency domain resource set and the second frequency domain resource set. For another example, a position of the second frequency domain resource set may be determined by: a position of the first frequency domain resource set; and the frequency domain interval between the second frequency domain resource set and the first frequency domain resource set.

In some embodiments, the frequency domain interval may be: an interval between a starting frequency of the first frequency domain resource set and a starting frequency of the second frequency domain resource set; an interval between a center frequency of the first frequency domain resource set and a center frequency of the second frequency domain resource set; or an interval between an ending frequency of the first frequency domain resource set and an ending frequency of the second frequency domain resource set. In other words, the reference point for calculating the frequency domain interval may be the starting frequency, the center frequency, or the ending frequency.

It should be noted that the association relationship between the first frequency domain resource set and the second frequency domain resource set may satisfy one or more of: predefined, or configured by a network device. For example, the frequency domain interval between the first frequency domain resource set and the second frequency domain resource set may satisfy one or more of: predefined, or configured by a network device.

It should be noted that the first frequency domain resource set and the second frequency domain resource set may be different or the same. In a case where the first frequency domain resource set and the second frequency domain resource set have an association relationship, whether the first frequency domain resource set and the second frequency domain resource set are the same may be determined based on the association relationship.

In some embodiments, the first rule may include: the frequency domain interval between the first frequency domain resource set and the second frequency domain resource set is less than or equal to a first threshold. The first threshold may be greater than or equal to 0. The frequency domain interval may be represented by ΔF, and the first threshold may be represented by Δ*F*ₘₐₓ. For example, in a case where the network device respectively configures the first frequency domain resource set and the second frequency domain resource set, the frequency domain interval between the first frequency domain resource set and the second frequency domain resource set configured by the network device is less than or equal to the first threshold. For another example, in a case where the first frequency domain resource set and the second frequency domain resource set have an association relationship, the frequency domain interval between the first frequency domain resource set and the second frequency domain resource set needs to be less than or equal to the first threshold.

In a case where the frequency domain interval between the first frequency domain resource set and the second frequency domain resource set is less than or equal to the first threshold, the terminal device can achieve synchronization of the first signal more accurately by monitoring the synchronization signal.

FIG. 8 is a schematic diagram of a first frequency domain resource set and a second frequency domain resource set provided by an embodiment of the disclosure. In FIG. 8, the first signal may include an LP-WUS, and the synchronization signal may include an SSB. The first frequency domain resource set may be a BWP for the LP-WUS; the second frequency domain resource set may be a BWP for the SSB. Reference point A1 may be a starting frequency of the BWP for the SSB. Reference point A2 may be a center frequency of the BWP for the SSB. Reference point A3 may be an ending frequency of the BWP for the SSB. Reference point B1 may be a starting frequency of the BWP for the LP-WUS. Reference point B2 may be a center frequency of the BWP for the LP-WUS. Reference point B3 may be an ending frequency of the BWP for the LP-WUS. The frequency domain interval may be an interval between reference point A1 and reference point B1; or, the frequency domain interval may be an interval between reference point A2 and reference point B2; or, the frequency domain interval may be an interval between reference point A3 and reference point B3. In addition, as illustrated in FIG. 8, the frequency domain interval ΔF is less than the first threshold Δ*F*ₘₐₓ.

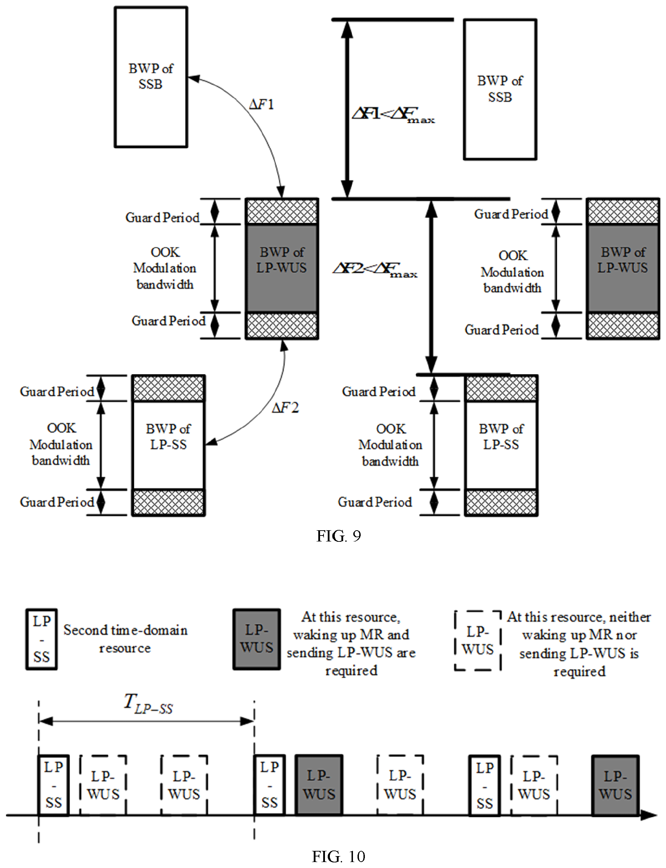

FIG. 8 illustrates by taking the synchronization signal as an SSB as an example. FIG. 9 is described below by taking the synchronization signal including an SSB and an LP-SS as an example. As illustrated in FIG. 9, the frequency domain interval between the BWP for the SSB and the BWP for the LP-WUS may be Δ*F*1*.* The frequency domain interval between the BWP for the LP-SS and the BWP for the LP-WUS may be Δ*F*2.Δ*F*1<Δ*F*ₘₐₓ.Δ*F*2<Δ*F*ₘₐₓ.

In some embodiments, the first frequency domain resource may belong to a first allocated resource. The first allocated resource may be a total frequency domain resource indicated or allocated by a network device for the first signal. The first allocated resource may include a first transmission frequency domain resource that can be occupied by the first signal and a first guard frequency domain resource occupied by a guard period. Taking the first signal being modulated by OOK as an example, the first allocated resource may be a frequency domain resource for OOK signal transmission; the first guard frequency domain resource may be a frequency domain resource that cannot be occupied by the OOK signal.

Optionally, the first allocated resource may satisfy: first allocated resource = first transmission frequency domain resource + first guard frequency domain resource.

Information of the first allocated resource may include one or more of: a size of the first allocated resource; a position of the first allocated resource; a ratio of the first transmission frequency domain resource to the first allocated resource; a ratio of the first transmission frequency domain resource to the first guard frequency domain resource; a ratio of the first guard frequency domain resource to the first allocated resource; a size of the first transmission frequency domain resource; a position of the first transmission frequency domain resource; a size of the first guard frequency domain resource; a position of the first guard frequency domain resource.

It should be noted that the position of a frequency domain resource may be represented by one or more of the following information of the frequency domain resource: a center frequency point, a starting frequency point, and an ending frequency point.

Regarding the first guard frequency domain resource, the first guard frequency domain resource may be represented by guard periods on both sides, or may be represented by a guard period on one side. The guard period on one side may be a guard period located at a higher position or a guard period located at a lower position among the guard periods on both sides. Based on this, the information of the first allocated resource may be related to the guard period on one side and/or the guard periods on both sides.

For example, the ratio of the first transmission frequency domain resource to the first guard frequency domain resource may include one or more of: a ratio of the first transmission frequency domain resource to a frequency domain resource occupied by the guard period on one side; a ratio of the first transmission frequency domain resource to a frequency domain resource occupied by the guard periods on both sides.

For another example, the ratio of the first guard frequency domain resource to the first allocated resource may include one or more of: a ratio of the frequency domain resource occupied by the guard period on one side to the first allocated resource; a ratio of the frequency domain resource occupied by the guard periods on both sides to the first allocated resource.

For another example, the size of the first guard frequency domain resource may include one or more of: a size of the frequency domain resource occupied by the guard period on one side; sizes of the frequency domain resources occupied by the guard periods on both sides.

For another example, the position of the first guard frequency domain resource may include one or more of: a position of the frequency domain resource occupied by the guard period on one side; positions of the frequency domain resources occupied by the guard periods on both sides.

The information of the first allocated resource satisfies one or more of: predefined, or configured by a network device.

For example, part of the information of the first allocated resource is predefined, and another part of the information is configured by the network device. Exemplarily, the position of the first transmission frequency domain resource and the position of the first guard frequency domain resource may be predefined. For example, it may be predefined that: the first transmission frequency domain resource is located in the middle, and the first guard frequency domain resource may be located on both sides. Exemplarily, one or more of the following may be configured by the network device: the ratio of the first transmission frequency domain resource to the first allocated resource; the ratio of the first transmission frequency domain resource to the first guard frequency domain resource; the ratio of the first guard frequency domain resource to the first allocated resource.

In some embodiments, the network device may first indicate the size and position of the first allocated resource. Further, the network device may indicate information related to the first transmission frequency domain resource in the information of the first allocated resource. The information related to the first transmission frequency domain resource may include one or more of: the size of the first transmission frequency domain resource, the position of the first transmission frequency domain resource, the ratio of the first transmission resource to the first allocated resource, etc. Further, the network device may indicate information related to the first guard frequency domain resource. The information related to the first guard frequency domain resource may include one or more of: the size of the first guard frequency domain resource, the position of the first guard frequency domain resource, the ratio of the first guard frequency domain resource to the first allocated resource, and the ratio of the first transmission frequency domain resource to the first guard frequency domain resource.

In some embodiments, the network device may first indicate the information related to the first transmission frequency domain resource, and may not indicate the information related to the first guard frequency domain resource. Optionally, when sending the first signal, the network device may determine sizes of the guard periods on both sides according to a predefined rule. Alternatively, the network device may further indicate the information related to the first guard frequency domain resource.

In some embodiments, the second frequency domain resource may belong to a second allocated resource. The second allocated resource may be a total frequency domain resource indicated or allocated by a network device for the synchronization signal. The second allocated resource may include a second transmission frequency domain resource that can be occupied by the synchronization signal and a second guard frequency domain resource occupied by a guard period. Taking the synchronization signal being modulated by OOK as an example, the second allocated resource may be a frequency domain resource for OOK signal transmission; the second guard frequency domain resource may be a frequency domain resource that cannot be occupied by the OOK signal.

Optionally, the second allocated resource may satisfy: second allocated resource = second transmission frequency domain resource + second guard frequency domain resource.

Information of the second allocated resource may include one or more of: a size of the second allocated resource; a position of the second allocated resource; a ratio of the second transmission frequency domain resource to the second allocated resource; a ratio of the second transmission frequency domain resource to the second guard frequency domain resource; a ratio of the second guard frequency domain resource to the second allocated resource; a size of the second transmission frequency domain resource; a position of the second transmission frequency domain resource; a size of the second guard frequency domain resource; a position of the second guard frequency domain resource.

Regarding the second guard frequency domain resource, the second guard frequency domain resource may be represented by guard periods on both sides, or may be represented by a guard period on one side. The guard period on one side may be a guard period located at a higher position or a guard period located at a lower position among the guard periods on both sides. Based on this, the information of the second allocated resource may be related to the guard period on one side and/or the guard periods on both sides. For example, the ratio of the second transmission frequency domain resource to the second guard frequency domain resource may include one or more of: a ratio of the second transmission frequency domain resource to a frequency domain resource occupied by the guard period on one side; a ratio of the second transmission frequency domain resource to a frequency domain resource occupied by the guard periods on both sides. For another example, the ratio of the second guard frequency domain resource to the second allocated resource may include one or more of: a ratio of the frequency domain resource occupied by the guard period on one side to the second allocated resource; a ratio of the frequency domain resource occupied by the guard periods on both sides to the second allocated resource. For another example, the size of the second guard frequency domain resource may include one or more of: a size of the frequency domain resource occupied by the guard period on one side; sizes of the frequency domain resources occupied by the guard periods on both sides. For another example, the position of the second guard frequency domain resource may include one or more of: a position of the frequency domain resource occupied by the guard period on one side; positions of the frequency domain resources occupied by the guard periods on both sides.

The information of the second allocated resource satisfies one or more of: predefined, or configured by a network device. For example, part of the information of the second allocated resource is predefined, and another part of the information is configured by the network device. Exemplarily, the position of the second transmission frequency domain resource and the position of the second guard frequency domain resource may be predefined. For example, it may be predefined that: the second transmission frequency domain resource is located in the middle, and the second guard frequency domain resource may be located on both sides. Exemplarily, one or more of the following may be configured by the network device: the ratio of the second transmission frequency domain resource to the second allocated resource; the ratio of the second transmission frequency domain resource to the second guard frequency domain resource; the ratio of the second guard frequency domain resource to the second allocated resource.

In some embodiments, the network device may first indicate the size and position of the second allocated resource. The network device may further indicate information related to the second transmission frequency domain resource in the information of the second allocated resource. The information related to the second transmission frequency domain resource may include one or more of: the size of the second transmission frequency domain resource, the position of the second transmission frequency domain resource, and the ratio of the second transmission resource to the second allocated resource. Further, the network device may indicate information related to the second guard frequency domain resource. The information related to the second guard frequency domain resource may include one or more of: the size of the second guard frequency domain resource, the position of the second guard frequency domain resource, the ratio of the second guard frequency domain resource to the second allocated resource, and the ratio of the second transmission frequency domain resource to the second guard frequency domain resource.

In some embodiments, the network device may first indicate the information related to the second transmission frequency domain resource, and may not indicate the information related to the second guard frequency domain resource. Optionally, when sending the synchronization signal, the network device may determine sizes of the guard periods on both sides according to a predefined rule. Alternatively, the network device may further indicate the information related to the second guard frequency domain resource.

It should be noted that the ratio of A to B described above may be A/B or B/A. That is, the disclosure does not limit which of A and B is in the denominator.

The above describes the association relationship in the frequency domain between the first resource and the second resource. The association relationship in the time domain between the first resource and the second resource is described below.

In some embodiments, the first resource may include a first time domain resource, and the second resource may include a second time domain resource. The first time domain resource and the second time domain resource may be associated, i.e., have an association relationship. For example, the second time domain resource may be determined based on the first time domain resource. For another example, the first time domain resource may be determined based on the second time domain resource.

In some embodiments, the first time domain resource and the second time domain resource may be time-division multiplexed. That is, the first signal and the synchronization signal are transmitted in a time-division manner in the time domain. For example, in a case where the first frequency domain resource and the second frequency domain resource belong to the same frequency domain resource set, the first time domain resource and the second time domain resource may be time-division multiplexed.

In some embodiments, the first time domain resource may belong to N candidate time domain resource(s), where N may be a positive integer. The candidate time domain resources can be used for transmitting the first signal. In other words, the candidate time domain resources may be time domain monitoring resources or transmission resources for the first signal. The terminal device may monitor the first signal on the candidate time domain resources, and the network device may transmit the first signal on the candidate time domain resources.

Exemplarily, the network device may transmit the first signal on the N candidate time domain resource(s). For example, in a case where it is necessary to wake up the second receiver, the network device may transmit the first signal on one or some of the N candidate time domain resources. For another example, in a case where it is not necessary to wake up the second receiver, the network device may not transmit the first signal. Therefore, the terminal device may not receive the first signal on some of the candidate time domain resources.

It should be noted that N may satisfy one or more of: predefined, configured by a network device, or specified by a protocol.

In some embodiments, the N candidate time domain resources may be used for transmitting M first signals. M may be greater than or equal to N. That is, each candidate time domain resource may be used for transmitting at least one first signal. The terminal device may monitor the first signal on a certain candidate time domain resource and may receive the first signal.

In some embodiments, the second time domain resource may be a periodically arranged resource. For example, the network device may configure periodic time domain resources for transmitting the synchronization signal. The network device may transmit the synchronization signal on the periodically arranged resources. Here, periodic arrangement of resources may indicate that corresponding resources appear at equal time intervals (i.e., periods). Exemplarily, the period of the second time domain resource may be 320 ms. In other words, every 320 ms, the network device may transmit the synchronization signal, and the terminal device may monitor the synchronization signal.

FIG. 10 is an example diagram of an arrangement of time domain resources provided by an embodiment of the disclosure. In FIG. 10, the synchronization signal includes an LP-SS, i.e., the second time domain resource may be a time domain resource capable of transmitting the LP-SS. As illustrated in FIG. 10, the second time domain resources are arranged periodically, with a period of T LP-SS.

In some embodiments, the second time domain resource may be arranged according to a transmission requirement of the synchronization signal. For example, in a case where transmission of the synchronization signal is required, the network device may schedule time domain resources for transmitting the synchronization signal.

In some embodiments, the second time domain resource may be arranged periodically, and the second time domain resource may be arranged according to the transmission requirement of the synchronization signal. For example, in a case where transmission of the synchronization signal is required, the network device may transmit the synchronization signal on the periodically arranged time domain resources for transmitting the synchronization signal; in a case where transmission of the synchronization signal is not required, the synchronization signal is not transmitted on the periodically arranged time domain resources for the synchronization signal.

The second time domain resource may be associated with the N candidate time domain resources. That is, the N candidate time domain resources may be determined based on the second time domain resource. Alternatively, the second time domain resource may be determined based on the N candidate time domain resources. For example, the association between the second time domain resource and the N candidate time domain resources may be related to a time domain interval between the second time domain resource and the N candidate time domain resources. Based on the second time domain resource and the time domain interval, the N candidate time domain resources may be determined, thereby determining the first time domain resource.

As a possible implementation, a target time domain resource unit in which the N candidate time domain resources are located may be determined. Further, a time domain resource subunit occupied by the N candidate time domain resources in the target time domain resource unit may be determined.

For example, the target time domain resource unit may be a first time domain resource unit in which the N candidate time domain resources are located. For another example, the target time domain resource unit may include any one or more time domain resource units in which the N candidate time domain resources are located.

It should be noted that a time domain resource unit may include multiple time domain resource subunits. For example, the time domain resource unit may be a frame, and the time domain resource subunit may be a symbol. That is, by determining a target frame in which the N candidate time domain resources are located, symbols occupied by the N candidate time domain resources in the target frame may be determined.

In some embodiments, an interval between a time domain resource unit in which the second time domain resource is located and the target time domain resource unit may be a first time interval. The target time domain resource unit may be determined based on the first time interval.

Optionally, there may be multiple first time intervals, and the multiple first time intervals may correspond one-to-one to multiple time domain resource units in which the N candidate time domain resources are located. The multiple time domain resource units in which the N candidate time domain resources are located may be respectively determined based on the multiple first time intervals.

Optionally, there may be one first time interval, and the one first time interval may correspond to a certain time domain resource unit in which the N candidate time domain resources are located. By determining the certain time domain resource unit in which the N candidate time domain resources are located, all time domain resource units in which the N candidate time domain resources are located may be further determined.

It should be noted that the first time interval may satisfy one or more of: predefined, or configured by a network device.

It should be noted that, considering that the first time domain resource can be determined based on the time domain resource unit in which the second time domain resource is located, the time domain resource unit in which the second time domain resource is located may also be referred to as a reference time domain resource unit. Taking the time domain resource unit being a frame as an example, the reference time domain resource unit may be a reference frame.

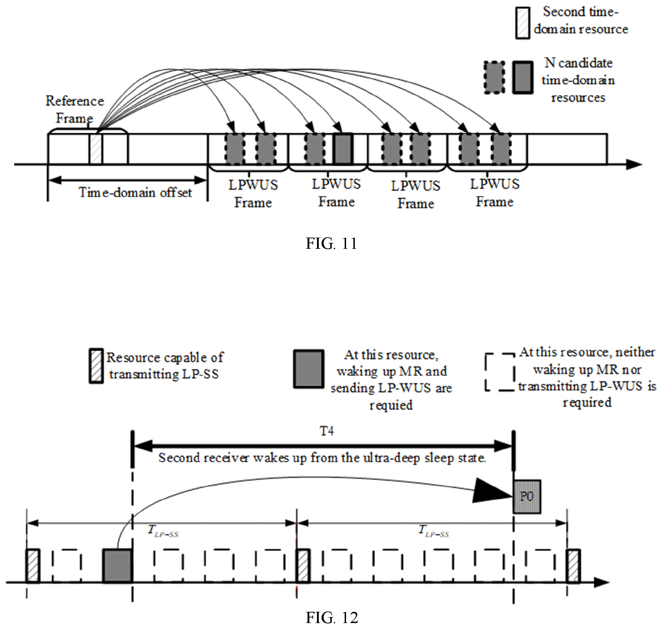

FIG. 11 is an example diagram of an association between a second time domain resource and N candidate time domain resources provided by an embodiment of the disclosure. As illustrated in FIG. 11, the second time domain resource may be associated with 8 candidate time domain resources, i.e., N=8. The terminal device may monitor the first signal on the 8 candidate time domain resources. In the scenario illustrated in FIG. 8, the fourth candidate time domain resource actually transmits the first signal, so the terminal device may receive the first signal on the fourth candidate time domain resource and cannot receive the first signal on the other candidate time domain resources.

In FIG. 11, the first time interval is represented by "time domain offset". The frames in which the N candidate time domain resources are located are referred to as LP-WUS frames. The earliest LP-WUS frame may be the target frame. Based on the reference frame in which the second time domain resource is located and the time domain offset, the time domain position of the target frame may be determined.

A time interval between the earliest time domain resource subunit of the target time domain resource unit and a time domain resource subunit occupied by the N candidate time domain resources in the target time domain resource unit is a second time interval. Alternatively, an index of the time domain resource subunit occupied by the N candidate time domain resources in the target time domain resource unit may be the second time interval. The time domain resource subunit occupied by the N candidate time domain resources in the target time domain resource unit may be determined based on the second time interval.

Optionally, there may be multiple second time intervals, and the multiple second time intervals may correspond one-to-one to multiple time domain resource subunits that can be occupied by the first signal in the target time domain resource unit. Based on the multiple second time intervals, it may be respectively determined, in the target time domain resource unit, on which time domain resource subunits the first signal is to be determined.

Optionally, there may be one second time interval, and the one second time interval may correspond to the earliest time domain resource subunit that can be occupied by the first signal in the target time domain resource unit. Based on the one second time interval, the earliest time domain resource subunit that can be occupied by the first signal in the target time domain resource unit may be determined, and then other time domain resource subunits that can be occupied by the first signal in the target time domain resource unit may be determined.

It should be noted that the number of time domain resource subunits that can be occupied by the first signal in the target time domain resource unit may satisfy one or more of: predefined, or configured by a network device. In a case where the number of time domain resource subunits corresponds one-to-one to monitoring occasions of the first signal, the number of monitoring occasions of the first signal in the target time domain resource unit may satisfy one or more of: predefined, or configured by a network device.

It should be noted that the second time interval may satisfy one or more of: predefined, or configured by a network device.

In some embodiments, a time interval between a time domain resource subunit in which the second time domain resource is located and a time domain resource subunit in which the N candidate time domain resources are located may be a third time interval, and the time domain resource subunit in which the N candidate time domain resources are located is determined based on the third time interval.

For example, the third time interval may be an interval between the earliest time domain resource subunit in which the second time domain resource is located and the earliest time domain resource subunit in which the N candidate time domain resources are located. For another example, the third time interval may be an interval between the last time domain resource subunit in which the second time domain resource is located and the earliest time domain resource subunit in which the N candidate time domain resources are located. For another example, the third time interval may be an interval between the earliest time domain resource subunit in which the second time domain resource is located and the last time domain resource subunit in which the N candidate time domain resources are located. For another example, the third time interval may be an interval between the last time domain resource subunit in which the second time domain resource is located and the last time domain resource subunit in which the N candidate time domain resources are located.

Optionally, there may be multiple third time intervals. The multiple third time intervals may correspond one-to-one to multiple time domain resource subunits in which the N candidate time domain resources are located. Based on the multiple third time intervals, the multiple time domain resource subunits in which the N candidate time domain resources are located may be respectively determined.

Optionally, there may be one third time interval. The one third time interval may correspond to any one of the time domain resource subunits in which the N candidate time domain resources are located. The any time domain resource subunit may be, for example, the first of the time domain resource subunits in which the N candidate time domain resources are located. That is, based on the one third time interval, the earliest time domain resource subunit among the N candidate time domain resources may be determined.

In some embodiments, in a case where part of the N candidate time domain resources are capable of transmitting the first signal for the terminal device, the part of the N candidate time domain resources may be determined based on one or more of: an identifier of the terminal device (UE ID); an identifier of a terminal group to which the terminal device belongs (UE group ID); an identifier of a sub-terminal group to which the terminal device belongs (UE subgroup ID). That is, there may be a mapping relationship between the N candidate time domain resources and each terminal device, and the mapping relationship may be determined based on the above information of the terminal device.

It can be understood that part of the N candidate time domain resources may transmit the first signal for a certain terminal device, and another part of the N candidate time domain resources may not be used for transmitting the first signal for the terminal device. For example, the another part of candidate time domain resources may transmit the first signal for other terminal devices. Based on one or more of: the identifier of the terminal device, the identifier of the terminal group, and the identifier of the sub-terminal group, the terminal device may determine candidate time domain resources to monitor, and the network device may determine candidate time domain resources to use for transmitting the first signal to the terminal device.

In some embodiments, a monitoring result of the synchronization signal may be used to indicate one or more of: whether the N candidate time domain resources have transmitted the first signal; which candidate time domain resources among the N candidate time domain resources have transmitted the first signal; which candidate time domain resources among the N candidate time domain resources have not transmitted the first signal. Here, the monitoring result of the synchronization signal may include a sequence of the synchronization signal. For example, the network device may indicate the above information of the first signal through the sequence of the synchronization signal. For another example, the terminal device may determine the above information of the first signal through the sequence of the synchronization signal.

Optionally, the synchronization signal may be associated with the terminal device. For example, the synchronization signal may be associated with the terminal device through one or more of: the identifier of the terminal device; the identifier of the terminal group to which the terminal device belongs; the identifier of the sub-terminal group to which the terminal device belongs. The association relationship may indicate which terminal devices need to monitor the first signal associated with the synchronization signal.

In some embodiments, a time domain resource of a PO (paging occasion) may be a third time domain resource. The first time domain resource may be associated with the third time domain resource. That is, the first time domain resource may be determined based on the third time domain resource. There may be a fourth time interval between the third time domain resource and the first time domain resource. The first time domain resource may be determined based on the fourth time interval and the third time domain resource.

FIG. 12 is an example diagram of time domain resources occupied by a first signal, a synchronization signal, and a PO provided by an embodiment of the disclosure. As illustrated in FIG. 12, the first receiver monitors periodically transmitted synchronization signals (the synchronization signal in FIG. 12 includes an LP-SS) to achieve necessary synchronization and perform RRM measurement. Based on the time domain resource occupied by the PO and the fourth time interval T4, the first time domain resource (i.e., the resource on which the LP-WUS is actually transmitted in FIG. 12) may be determined. When the first signal (the first signal in FIG. 12 includes an LP-WUS) is detected, the first receiver needs to wake up the second receiver to receive paging. During T4, the second receiver wakes up from the ultra-deep sleep state.

In some embodiments, compared with the first time interval between the second time domain resource and the first time domain resource, the fourth time interval between the time domain resource occupied by the PO and the first time domain resource may be relatively large. Exemplarily, according to the research of 3GPP Release 18, for the MR to switch from the ultra-deep sleep state to a state of monitoring paging, a ramp-up startup time and necessary synchronization are required, and this duration is at least about 400 ms. Therefore, the time interval between the LP-WUS and the PO needs to be at least greater than 400 ms. As described above, the period of the synchronization signal (e.g., LP-SS) may be considered to be 320 ms. Therefore, the time interval from the LP-WUS to a nearby LP-SS is relatively smaller than the time interval from the LP-WUS to the PO.

In some embodiments, the time domain resource corresponding to the first resource may be periodically arranged. Based on the rule of periodic arrangement, the network device and/or the terminal device may determine the first resource. For example, the first resource may belong to multiple wake-up frames. The wake-up frames may be periodically arranged.

The periodically arranged multiple wake-up frames may be represented by one or more of: a cycle; one or more offsets within one cycle. For example, for a frame with frame number nSFN, if nSFN mod x = y, the frame may be a wake-up frame. Here, x is equal to the cycle (also known as period) of the wake-up frame, and y is an index or offset of a time domain resource within the cycle that can transmit the first signal.

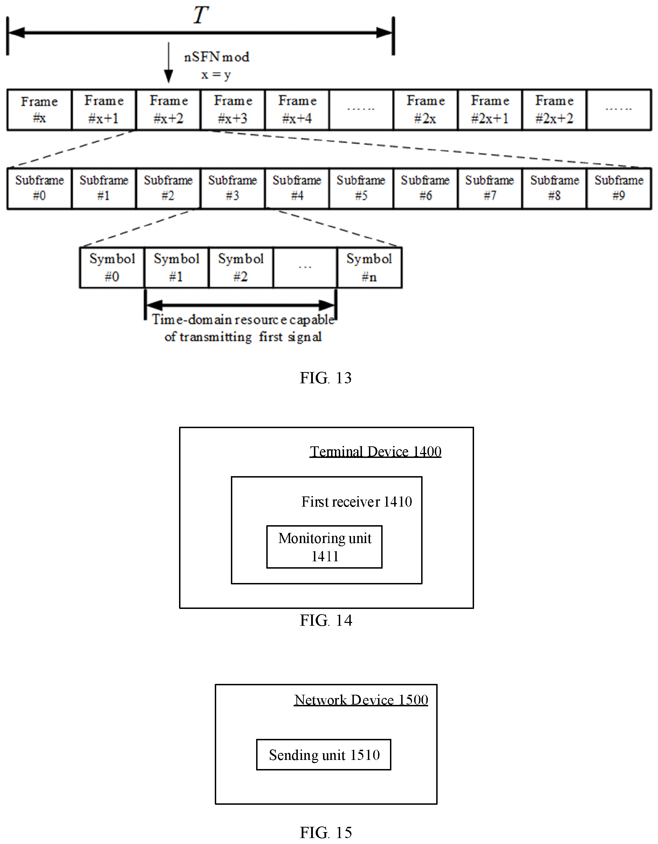

The following describes by taking FIG. 13 as an example. In FIG. 13, the cycle of the wake-up frame is represented by T. The value of y is 2 and 4. As illustrated in FIG. 13, within a window corresponding to cycle T, frame #x+2 and frame #x+4 may be wake-up frames.

In some embodiments, a time domain resource in the wake-up frame that can be used for transmitting the first signal may be indicated by the following parameter: a time domain position occupied by the time domain resource in the wake-up frame that can be used for transmitting the first signal. For example, the time domain resource in the wake-up frame that can be used for transmitting the first signal may be indicated by: a symbol occupied by the time domain resource in the wake-up frame that can be used for transmitting the first signal. That is, the symbols that can be occupied by the first signal in the wake-up frame may be directly determined.

It should be noted that the time domain position that can be occupied by the first signal in the wake-up frame may be predefined and/or configured by a network device. In a case of configured by the network device, the time domain position that can be occupied by the first signal in the wake-up frame may be configured via RRC signaling.

The time domain position that can be occupied by the first signal in the wake-up frame may be determined by a symbol starting position within the wake-up frame. The network device may configure one or more symbol starting positions.

In some embodiments, the time domain resource that can be used for transmitting the first signal may be determined in multiple levels. For example, the time domain resource in the wake-up frame that can be used for transmitting the first signal may be indicated by the following parameters: a subframe number occupied by the time domain resource in the wake-up frame that can be used for transmitting the first signal, and a symbol occupied within the subframe number. That is, one or more subframes that can be occupied by the first signal in the wake-up frame may be determined first, and then one or more symbols that can be occupied by the first signal in the subframe may be determined. The one or more symbols that can be occupied by the first signal in the subframe may be indicated by an offset of the symbol within the subframe.

Continuing to refer to FIG. 13, in wake-up frame #x+2, it may be determined that subframes that can be occupied by the first signal are subframe #3 and subframe #6. For subframe #3, it may be determined that symbols that can be occupied by the first signal are the gray portion.

It should be noted that a length of the time domain resource that can be occupied by the first signal may satisfy one or more of: specified by a protocol, or configured by a network device. The length of the time domain resource that can be occupied by the first signal may be the number of symbols. For example, the length of the time domain resource that can be occupied by the first signal may be the number of consecutive symbols.

Optionally, the determined first time domain resource may be a time domain resource corresponding to the first signal transmitted using a single beam, and the first signal and the synchronization signal may be QCL (quasi co-located).

Optionally, in a case where the first signal includes an LP-WUS, the determined LP-WUS time domain resource (i.e., the first time domain resource) may be a time domain resource of an LP-WUS burst set. The LP-WUS burst set may include X LP-WUS time domain resources, and X may be the same as the number of beams used. The LP-WUS may be QCL with the synchronization signal.

As described above, the periodically arranged first time domain resource may be configured by a network device. Exemplarily, the following IEs in RRC signaling may be used to configure the periodically arranged first time domain resource.

A first information element may be used to indicate a cycle of the first signal. The first information element may be represented by LPWUS-periodicityServingCell.

A second information element may be used to configure the position of the wake-up frame within the cycle (i.e., one or more offsets within one cycle). The second information element may be represented by LPWUS-positionInPeriodicity.

A third information element may be used to indicate a subcarrier spacing of the first signal. The third information element may be represented by LPWUS-SubcarrierSpacing.

A fourth information element may be used to indicate a length of the first time domain resource. The fourth information element may be represented by LPWUS-Duration.

A fifth information element may be used to indicate the time domain position of the first signal within the wake-up frame. The fifth information element may include one or more offsets. The fifth information element may include one or more levels of offsets. The fifth information element may be represented by LPWUS-timeoffset.

The method embodiments of the disclosure have been described in detail above, and the apparatus embodiments of the disclosure are described in detail below. It should be understood that the descriptions of the method embodiments and the descriptions of the apparatus embodiments correspond to each other; therefore, for parts not described in detail, reference may be made to the foregoing method embodiments.

FIG. 14 is a schematic structural diagram of a terminal device 1400 provided by an embodiment of the disclosure. The terminal device 1400 may include a first receiver 1410. The first receiver 1410 may include a monitoring unit 1411.

The monitoring unit 1411 is configured to monitor a first signal on a first resource; where the first signal is used to wake up a second receiver, and the first resource satisfies a first rule.

In some embodiments, the first receiver 1410 is further configured to: monitor a synchronization signal on a second resource; where the first rule is related to the second resource.

In some embodiments, the first resource includes a first frequency domain resource, the second resource includes a second frequency domain resource, and the first frequency domain resource and the second frequency domain resource satisfy the first rule.

In some embodiments, the first rule includes: the first frequency domain resource and the second frequency domain resource are located in a same frequency domain resource set.

In some embodiments, the first rule includes one of: the first frequency domain resource has a same size as the second frequency domain resource, and the first frequency domain resource has a same position as the second frequency domain resource; a center of the first frequency domain resource is aligned with a center of the second frequency domain resource, and the first frequency domain resource has a size different from that of the second frequency domain resource; the center of the first frequency domain resource is not aligned with the center of the second frequency domain resource.

In some embodiments, the second frequency domain resource belongs to one of multiple candidate synchronization signal frequency domain resources in the same frequency domain resource set, and the multiple candidate synchronization signal frequency domain resources satisfy one of: the multiple candidate synchronization signal frequency domain resources do not overlap with each other; the multiple candidate synchronization signal frequency domain resources may overlap with each other; centers of part or all of the multiple candidate synchronization signal frequency domain resources are aligned with the center of the first frequency domain resource.

In some embodiments, the same frequency domain resource set refers to a same BWP.

In some embodiments, the first frequency domain resource is located in a first frequency domain resource set, the second frequency domain resource is located in a second frequency domain resource set, and the first rule includes: the first frequency domain resource set and the second frequency domain resource set have an association relationship.

In some embodiments, a frequency domain interval between the first frequency domain resource set and the second frequency domain resource set is less than or equal to a first threshold, where the first threshold is greater than or equal to 0.

In some embodiments, a position of the first frequency domain resource set is determined by: a position of the second frequency domain resource set; and the frequency domain interval between the first frequency domain resource set and the second frequency domain resource set.

In some embodiments, the frequency domain interval is: an interval between a starting frequency of the first frequency domain resource set and a starting frequency of the second frequency domain resource set; an interval between a center frequency of the first frequency domain resource set and a center frequency of the second frequency domain resource set; or an interval between an ending frequency of the first frequency domain resource set and an ending frequency of the second frequency domain resource set.

In some embodiments, the first frequency domain resource set is a BWP to which the first resource belongs; and the second frequency domain resource set is a BWP to which the second resource belongs.

In some embodiments, the first frequency domain resource belongs to a first allocated resource, and the first allocated resource includes: a first transmission frequency domain resource that can be occupied by the first signal; and a first guard frequency domain resource occupied by a guard period.

In some embodiments, information of the first allocated resource includes one or more of: a ratio of the first transmission frequency domain resource to the first allocated resource; a ratio of the first transmission frequency domain resource to the first guard frequency domain resource; a ratio of the first guard frequency domain resource to the first allocated resource; a size of the first transmission frequency domain resource; a position of the first transmission frequency domain resource; a size of the first guard frequency domain resource; a position of the first guard frequency domain resource.

In some embodiments, the information of the first allocated resource satisfies one or more of: predefined, or configured by a network device.

In some embodiments, the second frequency domain resource belongs to a second allocated resource, and the second allocated resource includes: a second transmission frequency domain resource that can be occupied by the synchronization signal; and a second guard frequency domain resource occupied by a guard period.

In some embodiments, information of the second allocated resource includes one or more of: a ratio of the second transmission frequency domain resource to the second allocated resource; a ratio of the second transmission frequency domain resource to the second guard frequency domain resource; a ratio of the second guard frequency domain resource to the second allocated resource; a size of the second transmission frequency domain resource; a position of the second transmission frequency domain resource; a size of the second guard frequency domain resource; a position of the second guard frequency domain resource.

In some embodiments, the information of the second allocated resource satisfies one or more of: predefined, or configured by a network device.

In some embodiments, the first resource includes a first time domain resource, the second resource includes a second time domain resource, the first time domain resource belongs to N candidate time domain resources, part or all of the N candidate time domain resources are capable of transmitting the first signal, the second time domain resource is associated with the N candidate time domain resources, and N is a positive integer.

In some embodiments, the second time domain resource belongs to one or more of: resources arranged periodically; resources arranged according to a transmission requirement of the synchronization signal.

In some embodiments, a time interval between a time domain resource unit in which the second time domain resource is located and a target time domain resource unit in which the N candidate time domain resources are located is a first time interval, and the target time domain resource unit is determined based on the first time interval.

In some embodiments, the target time domain resource unit includes a first time domain resource unit in which the N candidate time domain resources are located.

In some embodiments, the first time interval satisfies one or more of: predefined, or configured by a network device.

In some embodiments, the target time domain resource unit includes multiple time domain resource subunits, a time interval between the earliest time domain resource subunit of the target time domain resource unit and a time domain resource subunit occupied by the N candidate time domain resources in the target time domain resource unit is a second time interval, and the time domain resource subunit occupied by the N candidate time domain resources in the target time domain resource unit is determined based on the second time interval.

In some embodiments, the second time interval satisfies one or more of: predefined, or configured by a network device.

In some embodiments, a time interval between a time domain resource subunit in which the second time domain resource is located and a time domain resource subunit in which the N candidate time domain resources are located is a third time interval, and the time domain resource subunit in which the N candidate time domain resources are located is determined based on the third time interval.

In some embodiments, the time domain resource unit includes a frame; and/or the time domain resource subunit includes a symbol.

In some embodiments, in a case where part of the N candidate time domain resources are capable of transmitting the first signal for the terminal device, the part of the N candidate time domain resources are determined based on one or more of: an identifier of the terminal device; an identifier of a terminal group to which the terminal device belongs; an identifier of a sub-terminal group to which the terminal device belongs.

In some embodiments, a sequence of the synchronization signal is used to indicate one or more of: whether the N candidate time domain resources have transmitted the first signal; which candidate time domain resources among the N candidate time domain resources have transmitted the first signal; which candidate time domain resources among the N candidate time domain resources have not transmitted the first signal.

In some embodiments, the synchronization signal is modulated by an on-off keying (OOK) scheme.

In some embodiments, the synchronization signal includes one or more of: a synchronization signal block (SSB), a primary synchronization signal (PSS), a secondary synchronization signal (SSS), a low power synchronization signal (LP-SS).

In some embodiments, the first resource belongs to multiple wake-up frames, and the multiple wake-up frames are arranged periodically.

In some embodiments, the multiple wake-up frames are represented by one or more of: a cycle; one or more offsets within one cycle.

In some embodiments, a time domain resource in the wake-up frame that can be used for transmitting the first signal is indicated by the following parameter: a symbol occupied by the time domain resource in the wake-up frame that can be used for transmitting the first signal; or, a subframe number occupied in the wake-up frame and a symbol occupied within the subframe number by the time domain resource in the wake-up frame that can be used for transmitting the first signal, and a symbol occupied within the subframe.

In some embodiments, the first signal includes an LP-WUS (low power wake-up signal).

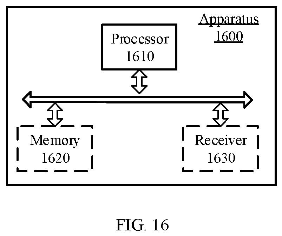

In an optional embodiment, the monitoring unit 1411 may be a processor 1610. The terminal device 1400 may further include a memory 1620 and a transceiver 1630, as specifically illustrated in FIG. 16.

FIG. 15 is a schematic structural diagram of a network device 1500 provided by an embodiment of the disclosure. The network device 1500 may include a sending unit 1510.

The sending unit 1510 is configured to send a first signal to a first receiver of a terminal device; where the first signal is capable of being transmitted on a first resource, the first signal is used to wake up a second receiver, and the first resource satisfies a first rule.

In some embodiments, the network device 1500 is further configured to: send a synchronization signal to the first receiver; where the synchronization signal is capable of being transmitted on a second resource, and the first rule is related to the second resource.

In some embodiments, the first resource includes a first frequency domain resource, the second resource includes a second frequency domain resource, and the first frequency domain resource and the second frequency domain resource satisfy the first rule.

In some embodiments, the first rule includes: the first frequency domain resource and the second frequency domain resource are located in a same frequency domain resource set.

In some embodiments, the first rule includes one of: the first frequency domain resource has a same size as the second frequency domain resource, and the first frequency domain resource has a same position as the second frequency domain resource; a center of the first frequency domain resource is aligned with a center of the second frequency domain resource, and the first frequency domain resource has a size different from that of the second frequency domain resource; the center of the first frequency domain resource is not aligned with the center of the second frequency domain resource.

In some embodiments, the second frequency domain resource belongs to one of multiple candidate synchronization signal frequency domain resources in the same frequency domain resource set, and the multiple candidate synchronization signal frequency domain resources satisfy one of: the multiple candidate synchronization signal frequency domain resources do not overlap with each other; the multiple candidate synchronization signal frequency domain resources may overlap with each other; centers of part or all of the multiple candidate synchronization signal frequency domain resources are aligned with the center of the first frequency domain resource.

In some embodiments, the same frequency domain resource set refers to a same BWP.

In some embodiments, the first frequency domain resource is located in a first frequency domain resource set, the second frequency domain resource is located in a second frequency domain resource set, and the first rule includes: the first frequency domain resource set and the second frequency domain resource set have an association relationship.

In some embodiments, a frequency domain interval between the first frequency domain resource set and the second frequency domain resource set is less than or equal to a first threshold, where the first threshold is greater than or equal to 0.

In some embodiments, a position of the first frequency domain resource set is determined by: a position of the second frequency domain resource set; and the frequency domain interval between the first frequency domain resource set and the second frequency domain resource set.

In some embodiments, the frequency domain interval is: an interval between a starting frequency of the first frequency domain resource set and a starting frequency of the second frequency domain resource set; an interval between a center frequency of the first frequency domain resource set and a center frequency of the second frequency domain resource set; or an interval between an ending frequency of the first frequency domain resource set and an ending frequency of the second frequency domain resource set.

In some embodiments, the first frequency domain resource set is a BWP to which the first resource belongs; and the second frequency domain resource set is a BWP to which the second resource belongs.

In some embodiments, the first frequency domain resource belongs to a first allocated resource, and the first allocated resource includes: a first transmission frequency domain resource that can be occupied by the first signal; and a first guard frequency domain resource occupied by a guard period.

In some embodiments, information of the first allocated resource includes one or more of: a ratio of the first transmission frequency domain resource to the first allocated resource; a ratio of the first transmission frequency domain resource to the first guard frequency domain resource; a ratio of the first guard frequency domain resource to the first allocated resource; a size of the first transmission frequency domain resource; a position of the first transmission frequency domain resource; a size of the first guard frequency domain resource; a position of the first guard frequency domain resource.

In some embodiments, the information of the first allocated resource satisfies one or more of: predefined, or configured by a network device.

In some embodiments, the second frequency domain resource belongs to a second allocated resource, and the second allocated resource includes: a second transmission frequency domain resource that can be occupied by the synchronization signal; and a second guard frequency domain resource occupied by a guard period.

In some embodiments, information of the second allocated resource includes one or more of: a ratio of the second transmission frequency domain resource to the second allocated resource; a ratio of the second transmission frequency domain resource to the second guard frequency domain resource; a ratio of the second guard frequency domain resource to the second allocated resource; a size of the second transmission frequency domain resource; a position of the second transmission frequency domain resource; a size of the second guard frequency domain resource; a position of the second guard frequency domain resource.

In some embodiments, the information of the second allocated resource satisfies one or more of: predefined, or configured by a network device.

In some embodiments, the first resource includes a first time domain resource, the second resource includes a second time domain resource, the first time domain resource belongs to N candidate time domain resources, part or all of the N candidate time domain resources are capable of transmitting the first signal, the second time domain resource is associated with the N candidate time domain resources, and N is a positive integer.

In some embodiments, the second time domain resource belongs to one or more of: resources arranged periodically; resources arranged according to a transmission requirement of the synchronization signal.

In some embodiments, a time interval between a time domain resource unit in which the second time domain resource is located and a target time domain resource unit in which the N candidate time domain resources are located is a first time interval, and the target time domain resource unit is determined based on the first time interval.

In some embodiments, the target time domain resource unit includes a first time domain resource unit in which the N candidate time domain resources are located.

In some embodiments, the first time interval satisfies one or more of: predefined, or configured by a network device.

In some embodiments, the target time domain resource unit includes multiple time domain resource subunits, a time interval between the earliest time domain resource subunit of the target time domain resource unit and a time domain resource subunit occupied by the N candidate time domain resources in the target time domain resource unit is a second time interval, and the time domain resource subunit occupied by the N candidate time domain resources in the target time domain resource unit is determined based on the second time interval.

In some embodiments, the second time interval satisfies one or more of: predefined, or configured by a network device.

In some embodiments, a time interval between a time domain resource subunit in which the second time domain resource is located and a time domain resource subunit in which the N candidate time domain resources are located is a third time interval, and the time domain resource subunit in which the N candidate time domain resources are located is determined based on the third time interval.

In some embodiments, the time domain resource unit includes a frame; and/or the time domain resource subunit includes a symbol.

In some embodiments, in a case where part of the N candidate time domain resources are capable of transmitting the first signal for the terminal device, the part of the N candidate time domain resources are determined based on one or more of: an identifier of the terminal device; an identifier of a terminal group to which the terminal device belongs; an identifier of a sub-terminal group to which the terminal device belongs.

In some embodiments, a sequence of the synchronization signal is used to indicate one or more of: whether the N candidate time domain resources have transmitted the first signal; which candidate time domain resources among the N candidate time domain resources have transmitted the first signal; which candidate time domain resources among the N candidate time domain resources have not transmitted the first signal.

In some embodiments, the synchronization signal is modulated by an OOK (On-Off Keying) scheme.

In some embodiments, the synchronization signal includes one or more of: an SSB, a PSS, an SSS, an LP-SS.

In some embodiments, the first resource belongs to multiple wake-up frames, and the multiple wake-up frames are arranged periodically.

In some embodiments, the multiple wake-up frames are represented by one or more of: a cycle; one or more offsets within one cycle.

In some embodiments, a time domain resource in the wake-up frame that can be used for transmitting the first signal is indicated by the following parameter: a symbol occupied by the time domain resource in the wake-up frame that can be used for transmitting the first signal; or, a subframe number occupied in the wake-up frame and a symbol occupied within the subframe by the time domain resource in the wake-up frame that can be used for transmitting the first signal.

In some embodiments, the first signal includes an LP-WUS.

In an optional embodiment, the sending unit 1510 may be a transceiver 1630. The network device 1500 may further include a processor 1610 and a memory 1620, as specifically illustrated in FIG. 16.

FIG. 18 is a schematic structural diagram of an apparatus for communication provided by an embodiment of the disclosure. The dashed lines in FIG. 18 indicate that the unit or module is optional. The apparatus 1800 may be used to implement the methods described in the foregoing method embodiments. The apparatus 1800 may be a chip, a terminal device, or a network device.

The apparatus 1800 may include one or more processors 1810. The processor 1810 may enable the apparatus 1800 to implement the methods described in the foregoing method embodiments. The processor 1810 may be a general-purpose processor or a dedicated processor. For example, the processor may be a central processing unit (CPU). Alternatively, the processor may be other general-purpose processors, digital signal processors (DSPs), application specific integrated circuits (ASICs), field programmable gate arrays (FPGAs) or other programmable logic devices, discrete gate or transistor logic devices, or discrete hardware components. A general-purpose processor may be a microprocessor or the processor may be any conventional processor or the like.

The apparatus 1800 may further include one or more memories 1820. A program is stored on the memory 1820, and the program may be executed by the processor 1810, so that the processor 1810 performs the methods described in the foregoing method embodiments. The memory 1820 may be independent of the processor 1810 or may be integrated into the processor 1810.

The apparatus 1800 may further include a transceiver 1830. The processor 1810 may communicate with other devices or chips through the transceiver 1830. For example, the processor 1810 may transmit and receive data to and from other devices or chips through the transceiver 1830.

An embodiment of the disclosure further provides a computer-readable storage medium for storing a program. The computer-readable storage medium may be applied to a terminal or a network device provided in the embodiments of the disclosure, and the program causes a computer to perform the methods performed by the terminal or the network device in the various embodiments of the disclosure.

An embodiment of the disclosure further provides a computer program product. The computer program product includes a program. The computer program product may be applied to a terminal or a network device provided in the embodiments of the disclosure, and the program causes a computer to perform the methods performed by the terminal or the network device in the various embodiments of the disclosure.

An embodiment of the disclosure further provides a computer program. The computer program may be applied to a terminal or a network device provided in the embodiments of the disclosure, and the computer program causes a computer to perform the methods performed by the terminal or the network device in the various embodiments of the disclosure.

It should be understood that the terms "system" and "network" in the disclosure may be used interchangeably. In addition, the terms used in the disclosure are only for the purpose of explaining specific embodiments of the disclosure and are not intended to limit the disclosure. The terms "first", "second", "third" and "fourth" in the specification, claims, and the accompanying drawings of the disclosure are used to distinguish different objects rather than to describe a specific order. Furthermore, the terms "include" and "have" as well as any variations thereof are intended to cover non-exclusive inclusion.

In the embodiments of the disclosure, "indication" may be direct indication, indirect indication, or indication of an association relationship. For example, A indicating B may mean that A directly indicates B, e.g., B may be obtained through A; or may mean that A indirectly indicates B, e.g., A indicates C, and B may be obtained through C; or may mean that there is an association relationship between A and B.

In the embodiments of the disclosure, "B corresponding to A" means that B is associated with A, and B may be determined based on A. However, it should also be understood that determining B based on A does not mean determining B solely based on A, and B may be determined based on A and/or other information.

In the embodiments of the disclosure, the term "correspond" may mean that there is a direct correspondence or an indirect correspondence between two items, or that there is an association relationship between them, or it may mean a relationship of indication and being indicated, configuration and being configured, etc.

In the embodiments of the disclosure, "predefined" or "preconfigured" may be implemented by pre-storing corresponding codes, tables, or other information that can be used to indicate relevant information in a device (e.g., including a terminal device and a network device). The disclosure does not limit the specific implementation thereof. For example, predefined may mean as defined in a protocol.

In the embodiments of the disclosure, the "protocol" may refer to a standard protocol in the communication field, for example, may include an LTE protocol, an NR protocol, and related protocols applied in future communication systems, which is not limited by the disclosure.

In the embodiments of the disclosure, the term "and/or" merely describes an association relationship between associated objects, indicating that three relationships may exist. For example, A and/or B may indicate: A alone exists, A and B exist simultaneously, and B alone exists. In addition, the character "/" herein generally indicates that the associated objects are in an "or" relationship.

In the embodiments of the disclosure, "include" may mean directly include or indirectly include. Optionally, "include" mentioned in the embodiments of the disclosure may be replaced with "indicate" or "used for determining". For example, A includes B may be replaced with A indicates B, or A is used for determining B.

In various embodiments of the disclosure, the sequence numbers of the above-described processes do not imply an order of execution, and the execution order of the processes should be determined by their functions and inherent logic, and should not constitute any limitation on the implementation processes of the embodiments of the disclosure.

In the several embodiments provided in the disclosure, it should be understood that the disclosed systems, apparatuses, and methods may be implemented in other manners. For example, the apparatus embodiments described above are merely illustrative. For example, the division of units is merely a logical function division, and there may be other division manners in actual implementation. For example, multiple units or components may be combined or integrated into another system, or some features may be ignored or not performed. In addition, the mutual coupling or direct coupling or communication connection illustrated or discussed may be indirect coupling or communication connection through some interfaces, apparatuses, or units, and may be electrical, mechanical, or in other forms.

The units described as separate components may or may not be physically separate, and components illustrated as units may or may not be physical units, i.e., they may be located in one place or may be distributed over multiple network units. Some or all of the units may be selected according to actual needs to achieve the purpose of the solution of this embodiment.

In addition, the functional units in the various embodiments of the disclosure may be integrated into one processing unit, or each unit may exist alone physically, or two or more units may be integrated into one unit.

In the above embodiments, they may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to the embodiments of the disclosure are generated in whole or in part. The computer may be a general-purpose computer, a special-purpose computer, a computer network, or other programmable apparatuses. The computer instructions may be stored in a computer-readable storage medium or transmitted from one computer-readable storage medium to another computer-readable storage medium. For example, the computer instructions may be transmitted from a website, computer, server, or data center by wire (e.g., coaxial cable, optical fiber, digital subscriber line (DSL)) or wirelessly (e.g., infrared, wireless, microwave, etc.) to another website, computer, server, or data center. The computer-readable storage medium may be any available medium that can be accessed by a computer, or a data storage device such as a server, data center, etc., that includes an integration of one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above description is merely specific implementations of the disclosure, but the protection scope of the disclosure is not limited thereto. Any change or substitution readily conceivable by a person skilled in the art within the technical scope disclosed in the disclosure shall be covered by the protection scope of the disclosure. Therefore, the protection scope of the disclosure shall be subject to the protection scope of the claims

## Claims

1. A wireless communication method, comprising:
monitoring, by a first receiver of a terminal device, a first signal on a first resource;
wherein the first signal is used to wake up a second receiver, and the first resource satisfies a first rule.

2. The method according to claim 1, wherein the method further comprises:
monitoring, by the first receiver, a synchronization signal on a second resource; wherein the first rule is related to the second resource.

3. The method according to claim 2, wherein the first resource comprises a first frequency domain resource, the second resource comprises a second frequency domain resource, and the first frequency domain resource and the second frequency domain resource satisfy the first rule.

4. The method according to claim 3, wherein the first rule comprises: the first frequency domain resource and the second frequency domain resource are located in a same frequency domain resource set.

5. The method according to claim 4, wherein the first rule comprises one of:
the first frequency domain resource has a same size as the second frequency domain resource, and the first frequency domain resource has a same position as the second frequency domain resource;
a center of the first frequency domain resource is aligned with a center of the second frequency domain resource, and the first frequency domain resource has a size different from that of the second frequency domain resource; or
the center of the first frequency domain resource is not aligned with the center of the second frequency domain resource.

6. The method according to claim 4 or 5, wherein the second frequency domain resource is one of multiple candidate synchronization signal frequency domain resources in the same frequency domain resource set, and the multiple candidate synchronization signal frequency domain resources satisfy one of:
the multiple candidate synchronization signal frequency domain resources do not overlap with each other;
the multiple candidate synchronization signal frequency domain resources may overlap with each other;
centers of part or all of the multiple candidate synchronization signal frequency domain resources are aligned with the center of the first frequency domain resource.

7. The method according to any one of claims 4-6, wherein the same frequency domain resource set refers to a same bandwidth part (BWP).

8. The method according to claim 3, wherein the first frequency domain resource is located in a first frequency domain resource set, the second frequency domain resource is located in a second frequency domain resource set, and the first rule comprises:
the first frequency domain resource set and the second frequency domain resource set have an association relationship.

9. The method according to claim 8, wherein a frequency domain interval between the first frequency domain resource set and the second frequency domain resource set is less than or equal to a first threshold, wherein the first threshold is greater than or equal to 0.

10. The method according to claim 8 or 9, wherein a position of the first frequency domain resource set is determined by:
a position of the second frequency domain resource set; and
the frequency domain interval between the first frequency domain resource set and the second frequency domain resource set.

11. The method according to claim 9 or 10, wherein the frequency domain interval is:
an interval between a starting frequency of the first frequency domain resource set and a starting frequency of the second frequency domain resource set;
an interval between a center frequency of the first frequency domain resource set and a center frequency of the second frequency domain resource set; or
an interval between an ending frequency of the first frequency domain resource set and an ending frequency of the second frequency domain resource set.

12. The method according to any one of claims 8-11, wherein the first frequency domain resource set is a BWP to which the first resource belongs; and the second frequency domain resource set is a BWP to which the second resource belongs.

13. The method according to any one of claims 3-12, wherein the first frequency domain resource belongs to a first allocated resource, and the first allocated resource comprises: a first transmission frequency domain resource that can be occupied by the first signal; and a first guard frequency domain resource occupied by a guard period.

14. The method according to claim 13, wherein information of the first allocated resource comprises one or more of:
a ratio of the first transmission frequency domain resource to the first allocated resource;
a ratio of the first transmission frequency domain resource to the first guard frequency domain resource;
a ratio of the first guard frequency domain resource to the first allocated resource;
a size of the first transmission frequency domain resource;
a position of the first transmission frequency domain resource;
a size of the first guard frequency domain resource;
a position of the first guard frequency domain resource.

15. The method according to claim 13 or 14, wherein the information of the first allocated resource satisfies one or more of: predefined, or configured by a network device.

16. The method according to any one of claims 3-15, wherein the second frequency domain resource belongs to a second allocated resource, and the second allocated resource comprises: a second transmission frequency domain resource that can be occupied by the synchronization signal; and a second guard frequency domain resource occupied by a guard period.

17. The method according to claim 16, wherein information of the second allocated resource comprises one or more of:
a ratio of the second transmission frequency domain resource to the second allocated resource;
a ratio of the second transmission frequency domain resource to the second guard frequency domain resource;
a ratio of the second guard frequency domain resource to the second allocated resource;
a size of the second transmission frequency domain resource;
a position of the second transmission frequency domain resource;
a size of the second guard frequency domain resource;
a position of the second guard frequency domain resource.

18. The method according to claim 16 or 17, wherein the information of the second allocated resource satisfies one or more of: predefined, or configured by a network device.

19. The method according to any one of claims 2-18, wherein the first resource comprises a first time domain resource, the second resource comprises a second time domain resource, the first time domain resource belongs to N candidate time domain resources, part or all of the N candidate time domain resources are capable of transmitting the first signal, the second time domain resource is associated with the N candidate time domain resources, and N is a positive integer.

20. The method according to claim 19, wherein the second time domain resource belongs to one or more of:
resources arranged periodically;
resources arranged according to a transmission requirement of the synchronization signal.

21. The method according to claim 19 or 20, wherein a time interval between a time domain resource unit in which the second time domain resource is located and a target time domain resource unit in which the N candidate time domain resources are located is a first time interval, and the target time domain resource unit is determined based on the first time interval.

22. The method according to claim 21, wherein the target time domain resource unit comprises a first time domain resource unit in which the N candidate time domain resources are located.

23. The method according to claim 21 or 22, wherein the first time interval satisfies one or more of: predefined, or configured by a network device.

24. The method according to any one of claims 21-23, wherein the target time domain resource unit comprises multiple time domain resource subunits, a time interval between an earliest time domain resource subunit of the target time domain resource unit and a time domain resource subunit occupied by the N candidate time domain resources in the target time domain resource unit is a second time interval, and the time domain resource subunit occupied by the N candidate time domain resources in the target time domain resource unit is determined based on the second time interval.

25. The method according to claim 24, wherein the second time interval satisfies one or more of: predefined, or configured by a network device.

26. The method according to claim 19 or 20, wherein a time interval between a time domain resource subunit in which the second time domain resource is located and a time domain resource subunit in which the N candidate time domain resources are located is a third time interval, and the time domain resource subunit in which the N candidate time domain resources are located is determined based on the third time interval.

27. The method according to any one of claims 21-26, wherein the time domain resource unit comprises a frame; and/or the time domain resource subunit comprises a symbol.

28. The method according to any one of claims 19-27, wherein, in a case where part of the N candidate time domain resources are capable of transmitting the first signal for the terminal device, the part of the N candidate time domain resources are determined based on one or more of:
an identifier of the terminal device;
an identifier of a terminal group to which the terminal device belongs;
an identifier of a sub-terminal group to which the terminal device belongs.

29. The method according to any one of claims 19-28, wherein a sequence of the synchronization signal is used to indicate one or more of:
whether the N candidate time domain resources have transmitted the first signal;
which candidate time domain resources among the N candidate time domain resources have transmitted the first signal;
which candidate time domain resources among the N candidate time domain resources have not transmitted the first signal.

30. The method according to any one of claims 2-29, wherein the synchronization signal is modulated by an on-off keying (OOK) scheme.

31. The method according to any one of claims 2-30, wherein the synchronization signal comprises one or more of: a synchronization signal block (SSB), a primary synchronization signal (PSS), a secondary synchronization signal (SSS), a low power synchronization signal (LP-SS).

32. The method according to any one of claims 1-31, wherein the first resource belongs to multiple wake-up frames, and the multiple wake-up frames are arranged periodically.

33. The method according to claim 32, wherein the multiple wake-up frames are represented by one or more of:
a cycle;
one or more offsets within one cycle.

34. The method according to claim 32 or 33, wherein a time domain resource in the wake-up frame that can be used for transmitting the first signal is indicated by the following parameter:
a symbol occupied by the time domain resource in the wake-up frame that can be used for transmitting the first signal; or
a subframe number occupied in the wake-up frame and a symbol occupied within the subframe number by the time domain resource in the wake-up frame that can be used for transmitting the first signal.

35. The method according to any one of claims 1-34, wherein the first signal comprises a low power wake-up signal (LP-WUS).

36. A wireless communication method, comprising:
sending, by a network device, a first signal to a first receiver of a terminal device;
wherein the first signal is capable of being transmitted on a first resource, the first signal is used to wake up a second receiver, and the first resource satisfies a first rule.

37. The method according to claim 36, wherein the method further comprises:
sending, by the network device, a synchronization signal to the first receiver;
wherein the synchronization signal is capable of being transmitted on a second resource, and the first rule is related to the second resource.

38. The method according to claim 37, wherein the first resource comprises a first frequency domain resource, the second resource comprises a second frequency domain resource, and the first frequency domain resource and the second frequency domain resource satisfy the first rule.

39. The method according to claim 38, wherein the first rule comprises: the first frequency domain resource and the second frequency domain resource are located in a same frequency domain resource set.

40. The method according to claim 39, wherein the first rule comprises one of:
the first frequency domain resource has a same size as the second frequency domain resource, and the first frequency domain resource has a same position as the second frequency domain resource;
a center of the first frequency domain resource is aligned with a center of the second frequency domain resource, and the first frequency domain resource has a size different from that of the second frequency domain resource;
the center of the first frequency domain resource is not aligned with the center of the second frequency domain resource.

41. The method according to claim 39 or 40, wherein the second frequency domain resource is one of multiple candidate synchronization signal frequency domain resources in the same frequency domain resource set, and the multiple candidate synchronization signal frequency domain resources satisfy one of:
the multiple candidate synchronization signal frequency domain resources do not overlap with each other;
the multiple candidate synchronization signal frequency domain resources may overlap with each other;
centers of part or all of the multiple candidate synchronization signal frequency domain resources are aligned with the center of the first frequency domain resource.

42. The method according to any one of claims 39-41, wherein the same frequency domain resource set refers to a same bandwidth part (BWP).

43. The method according to claim 38, wherein the first frequency domain resource is located in a first frequency domain resource set, the second frequency domain resource is located in a second frequency domain resource set, and the first rule comprises:
the first frequency domain resource set and the second frequency domain resource set have an association relationship.

44. The method according to claim 43, wherein a frequency domain interval between the first frequency domain resource set and the second frequency domain resource set is less than or equal to a first threshold, wherein the first threshold is greater than or equal to 0.

45. The method according to claim 43 or 44, wherein a position of the first frequency domain resource set is determined by:
a position of the second frequency domain resource set; and
the frequency domain interval between the first frequency domain resource set and the second frequency domain resource set.

46. The method according to claim 44 or 45, wherein the frequency domain interval is:
an interval between a starting frequency of the first frequency domain resource set and a starting frequency of the second frequency domain resource set;
an interval between a center frequency of the first frequency domain resource set and a center frequency of the second frequency domain resource set; or
an interval between an ending frequency of the first frequency domain resource set and an ending frequency of the second frequency domain resource set.

47. The method according to any one of claims 43-46, wherein the first frequency domain resource set is a BWP to which the first resource belongs; and the second frequency domain resource set is a BWP to which the second resource belongs.

48. The method according to any one of claims 38-47, wherein the first frequency domain resource belongs to a first allocated resource, and the first allocated resource comprises: a first transmission frequency domain resource that can be occupied by the first signal; and a first guard frequency domain resource occupied by a guard period.

49. The method according to claim 48, wherein information of the first allocated resource comprises one or more of:
a ratio of the first transmission frequency domain resource to the first allocated resource;
a ratio of the first transmission frequency domain resource to the first guard frequency domain resource;
a ratio of the first guard frequency domain resource to the first allocated resource;
a size of the first transmission frequency domain resource;
a position of the first transmission frequency domain resource;
a size of the first guard frequency domain resource;
a position of the first guard frequency domain resource.

50. The method according to claim 48 or 49, wherein the information of the first allocated resource satisfies one or more of: predefined, or configured by a network device.

51. The method according to any one of claims 38-50, wherein the second frequency domain resource belongs to a second allocated resource, and the second allocated resource comprises: a second transmission frequency domain resource that can be occupied by the synchronization signal; and a second guard frequency domain resource occupied by a guard period.

52. The method according to claim 51, wherein information of the second allocated resource comprises one or more of:
a ratio of the second transmission frequency domain resource to the second allocated resource;
a ratio of the second transmission frequency domain resource to the second guard frequency domain resource;
a ratio of the second guard frequency domain resource to the second allocated resource;
a size of the second transmission frequency domain resource;
a position of the second transmission frequency domain resource;
a size of the second guard frequency domain resource;
a position of the second guard frequency domain resource.

53. The method according to claim 51 or 52, wherein the information of the second allocated resource satisfies one or more of: predefined, or configured by a network device.

54. The method according to any one of claims 37-53, wherein the first resource comprises a first time domain resource, the second resource comprises a second time domain resource, the first time domain resource belongs to N candidate time domain resources, part or all of the N candidate time domain resources are capable of transmitting the first signal, the second time domain resource is associated with the N candidate time domain resources, and N is a positive integer.

55. The method according to claim 54, wherein the second time domain resource belongs to one or more of:
resources arranged periodically;
resources arranged according to a transmission requirement of the synchronization signal.

56. The method according to claim 54 or 55, wherein a time interval between a time domain resource unit in which the second time domain resource is located and a target time domain resource unit in which the N candidate time domain resources are located is a first time interval, and the target time domain resource unit is determined based on the first time interval.

57. The method according to claim 56, wherein the target time domain resource unit comprises a first time domain resource unit in which the N candidate time domain resources are located.

58. The method according to claim 56 or 57, wherein the first time interval satisfies one or more of: predefined, or configured by a network device.

59. The method according to any one of claims 56-58, wherein the target time domain resource unit comprises multiple time domain resource subunits, a time interval between an earliest time domain resource subunit of the target time domain resource unit and a time domain resource subunit occupied by the N candidate time domain resources in the target time domain resource unit is a second time interval, and the time domain resource subunit occupied by the N candidate time domain resources in the target time domain resource unit is determined based on the second time interval.

60. The method according to claim 59, wherein the second time interval satisfies one or more of: predefined, or configured by a network device.

61. The method according to claim 54 or 55, wherein a time interval between a time domain resource subunit in which the second time domain resource is located and a time domain resource subunit in which the N candidate time domain resources are located is a third time interval, and the time domain resource subunit in which the N candidate time domain resources are located is determined based on the third time interval.

62. The method according to any one of claims 56-61, wherein the time domain resource unit comprises a frame; and/or the time domain resource subunit comprises a symbol.

63. The method according to any one of claims 54-62, wherein, in a case where part of the N candidate time domain resources are capable of transmitting the first signal for the terminal device, the part of the N candidate time domain resources are determined based on one or more of:
an identifier of the terminal device;
an identifier of a terminal group to which the terminal device belongs;
an identifier of a sub-terminal group to which the terminal device belongs.

64. The method according to any one of claims 54-63, wherein a sequence of the synchronization signal is used to indicate one or more of:
whether the N candidate time domain resources have transmitted the first signal;
which candidate time domain resources among the N candidate time domain resources have transmitted the first signal;
which candidate time domain resources among the N candidate time domain resources have not transmitted the first signal.

65. The method according to any one of claims 37-64, wherein the synchronization signal is modulated by an on-off keying (OOK) scheme.

66. The method according to any one of claims 37-65, wherein the synchronization signal comprises one or more of: a synchronization signal block (SSB), a primary synchronization signal (PSS), a secondary synchronization signal (SSS), a low power synchronization signal (LP-SS).

67. The method according to any one of claims 36-66, wherein the first resource belongs to multiple wake-up frames, and the multiple wake-up frames are arranged periodically.

68. The method according to claim 67, wherein the multiple wake-up frames are represented by one or more of:
a cycle;
one or more offsets within one cycle.

69. The method according to claim 67 or 68, wherein a time domain resource in the wake-up frame that can be used for transmitting the first signal is indicated by the following parameter:
a symbol occupied by the time domain resource in the wake-up frame that can be used for transmitting the first signal; or
a subframe number occupied in the wake-up frame and a symbol occupied within the subframe number by the time domain resource in the wake-up frame that can be used for transmitting the first signal.

70. The method according to any one of claims 36-69, wherein the first signal comprises a low power wake-up signal (LP-WUS).

71. A terminal device, wherein the terminal device comprises a first receiver, and the first receiver comprises:
a monitoring unit configured to monitor a first signal on a first resource;
wherein the first signal is used to wake up a second receiver, and the first resource satisfies a first rule.

72. The terminal device according to claim 71, wherein the first receiver is further configured to:
monitor a synchronization signal on a second resource;
wherein the first rule is related to the second resource.

73. The terminal device according to claim 72, wherein the first resource comprises a first frequency domain resource, the second resource comprises a second frequency domain resource, and the first frequency domain resource and the second frequency domain resource satisfy the first rule.

74. The terminal device according to claim 73, wherein the first rule comprises: the first frequency domain resource and the second frequency domain resource are located in a same frequency domain resource set.

75. The terminal device according to claim 74, wherein the first rule comprises one of:
the first frequency domain resource has a same size as the second frequency domain resource, and the first frequency domain resource has a same position as the second frequency domain resource;
a center of the first frequency domain resource is aligned with a center of the second frequency domain resource, and the first frequency domain resource has a size different from that of the second frequency domain resource; or
the center of the first frequency domain resource is not aligned with the center of the second frequency domain resource.

76. The terminal device according to claim 74 or 75, wherein the second frequency domain resource is one of multiple candidate synchronization signal frequency domain resources in the same frequency domain resource set, and the multiple candidate synchronization signal frequency domain resources satisfy one of:
the multiple candidate synchronization signal frequency domain resources do not overlap with each other;
the multiple candidate synchronization signal frequency domain resources may overlap with each other;
centers of part or all of the multiple candidate synchronization signal frequency domain resources are aligned with the center of the first frequency domain resource.

77. The terminal device according to any one of claims 74-76, wherein the same frequency domain resource set refers to a same bandwidth part (BWP).

78. The terminal device according to claim 73, wherein the first frequency domain resource is located in a first frequency domain resource set, the second frequency domain resource is located in a second frequency domain resource set, and the first rule comprises:
the first frequency domain resource set and the second frequency domain resource set have an association relationship.

79. The terminal device according to claim 78, wherein a frequency domain interval between the first frequency domain resource set and the second frequency domain resource set is less than or equal to a first threshold, wherein the first threshold is greater than or equal to 0.

80. The terminal device according to claim 78 or 79, wherein a position of the first frequency domain resource set is determined by:
a position of the second frequency domain resource set; and
the frequency domain interval between the first frequency domain resource set and the second frequency domain resource set.

81. The terminal device according to claim 79 or 80, wherein the frequency domain interval is:
an interval between a starting frequency of the first frequency domain resource set and a starting frequency of the second frequency domain resource set;
an interval between a center frequency of the first frequency domain resource set and a center frequency of the second frequency domain resource set; or
an interval between an ending frequency of the first frequency domain resource set and an ending frequency of the second frequency domain resource set.

82. The terminal device according to any one of claims 78-81, wherein the first frequency domain resource set is a BWP to which the first resource belongs; and the second frequency domain resource set is a BWP to which the second resource belongs.

83. The terminal device according to any one of claims 73-82, wherein the first frequency domain resource belongs to a first allocated resource, and the first allocated resource comprises: a first transmission frequency domain resource that can be occupied by the first signal; and a first guard frequency domain resource occupied by a guard period.

84. The terminal device according to claim 83, wherein information of the first allocated resource comprises one or more of:
a ratio of the first transmission frequency domain resource to the first allocated resource;
a ratio of the first transmission frequency domain resource to the first guard frequency domain resource;
a ratio of the first guard frequency domain resource to the first allocated resource;
a size of the first transmission frequency domain resource;
a position of the first transmission frequency domain resource;
a size of the first guard frequency domain resource;
a position of the first guard frequency domain resource.

85. The terminal device according to claim 83 or 84, wherein the information of the first allocated resource satisfies one or more of: predefined, or configured by a network device.

86. The terminal device according to any one of claims 73-85, wherein the second frequency domain resource belongs to a second allocated resource, and the second allocated resource comprises: a second transmission frequency domain resource that can be occupied by the synchronization signal; and a second guard frequency domain resource occupied by a guard period.

87. The terminal device according to claim 86, wherein information of the second allocated resource comprises one or more of:
a ratio of the second transmission frequency domain resource to the second allocated resource;
a ratio of the second transmission frequency domain resource to the second guard frequency domain resource;
a ratio of the second guard frequency domain resource to the second allocated resource;
a size of the second transmission frequency domain resource;
a position of the second transmission frequency domain resource;
a size of the second guard frequency domain resource;
a position of the second guard frequency domain resource.

88. The terminal device according to claim 86 or 87, wherein the information of the second allocated resource satisfies one or more of: predefined, or configured by a network device.

89. The terminal device according to any one of claims 72-88, wherein the first resource comprises a first time domain resource, the second resource comprises a second time domain resource, the first time domain resource belongs to N candidate time domain resources, part or all of the N candidate time domain resources are capable of transmitting the first signal, the second time domain resource is associated with the N candidate time domain resources, and N is a positive integer.

90. The terminal device according to claim 89, wherein the second time domain resource belongs to one or more of:
resources arranged periodically;
resources arranged according to a transmission requirement of the synchronization signal.

91. The terminal device according to claim 89 or 90, wherein a time interval between a time domain resource unit in which the second time domain resource is located and a target time domain resource unit in which the N candidate time domain resources are located is a first time interval, and the target time domain resource unit is determined based on the first time interval.

92. The terminal device according to claim 91, wherein the target time domain resource unit comprises a first time domain resource unit in which the N candidate time domain resources are located.

93. The terminal device according to claim 91 or 92, wherein the first time interval satisfies one or more of: predefined, or configured by a network device.

94. The terminal device according to any one of claims 91-93, wherein the target time domain resource unit comprises multiple time domain resource subunits, a time interval between an earliest time domain resource subunit of the target time domain resource unit and a time domain resource subunit occupied by the N candidate time domain resources in the target time domain resource unit is a second time interval, and the time domain resource subunit occupied by the N candidate time domain resources in the target time domain resource unit is determined based on the second time interval.

95. The terminal device according to claim 94, wherein the second time interval satisfies one or more of: predefined, or configured by a network device.

96. The terminal device according to claim 89 or 90, wherein a time interval between a time domain resource subunit in which the second time domain resource is located and a time domain resource subunit in which the N candidate time domain resources are located is a third time interval, and the time domain resource subunit in which the N candidate time domain resources are located is determined based on the third time interval.

97. The terminal device according to any one of claims 91-96, wherein the time domain resource unit comprises a frame; and/or the time domain resource subunit comprises a symbol.

98. The terminal device according to any one of claims 89-97, wherein, in a case where part of the N candidate time domain resources are capable of transmitting the first signal for the terminal device, the part of the N candidate time domain resources are determined based on one or more of:
an identifier of the terminal device;
an identifier of a terminal group to which the terminal device belongs;
an identifier of a sub-terminal group to which the terminal device belongs.

99. The terminal device according to any one of claims 89-98, wherein a sequence of the synchronization signal is used to indicate one or more of:
whether the N candidate time domain resources have transmitted the first signal;
which candidate time domain resources among the N candidate time domain resources have transmitted the first signal;
which candidate time domain resources among the N candidate time domain resources have not transmitted the first signal.

100. The terminal device according to any one of claims 72-99, wherein the synchronization signal is modulated by an on-off keying (OOK) scheme.

101. The terminal device according to any one of claims 72-100, wherein the synchronization signal comprises one or more of: a synchronization signal block (SSB), a primary synchronization signal (PSS), a secondary synchronization signal (SSS), a low power synchronization signal (LP-SS).

102. The terminal device according to any one of claims 71-101, wherein the first resource belongs to multiple wake-up frames, and the multiple wake-up frames are arranged periodically.

103. The terminal device according to claim 102, wherein the multiple wake-up frames are represented by one or more of:
a cycle;
one or more offsets within one cycle.

104. The terminal device according to claim 102 or 103, wherein a time domain resource in the wake-up frame that can be used for transmitting the first signal is indicated by the following parameter:
a symbol occupied by the time domain resource in the wake-up frame that can be used for transmitting the first signal; or,
a subframe number occupied in the wake-up frame and a symbol occupied within the subframe number by the time domain resource in the wake-up frame that can be used for transmitting the first signal, and a symbol occupied within the subframe number.

105. The terminal device according to any one of claims 71-104, wherein the first signal comprises a low power wake-up signal (LP-WUS).

106. A network device, comprising:
a sending unit configured to send a first signal to a first receiver of a terminal device;
wherein the first signal is capable of being transmitted on a first resource, the first signal is used to wake up a second receiver, and the first resource satisfies a first rule.

107. The network device according to claim 106, wherein the network device is further configured to:
send a synchronization signal to the first receiver;
wherein the synchronization signal is capable of being transmitted on a second resource, and the first rule is related to the second resource.

108. The network device according to claim 107, wherein the first resource comprises a first frequency domain resource, the second resource comprises a second frequency domain resource, and the first frequency domain resource and the second frequency domain resource satisfy the first rule.

109. The network device according to claim 108, wherein the first rule comprises: the first frequency domain resource and the second frequency domain resource are located in a same frequency domain resource set.

110. The network device according to claim 109, wherein the first rule comprises one of:
the first frequency domain resource has a same size as the second frequency domain resource, and the first frequency domain resource has a same position as the second frequency domain resource;
a center of the first frequency domain resource is aligned with a center of the second frequency domain resource, and the first frequency domain resource has a size different from that of the second frequency domain resource;
the center of the first frequency domain resource is not aligned with the center of the second frequency domain resource.

111. The network device according to claim 109 or 110, wherein the second frequency domain resource is one of multiple candidate synchronization signal frequency domain resources in the same frequency domain resource set, and the multiple candidate synchronization signal frequency domain resources satisfy one of:
the multiple candidate synchronization signal frequency domain resources do not overlap with each other;
the multiple candidate synchronization signal frequency domain resources may overlap with each other;
centers of part or all of the multiple candidate synchronization signal frequency domain resources are aligned with the center of the first frequency domain resource.

112. The network device according to any one of claims 109-111, wherein the same frequency domain resource set refers to a same bandwidth part (BWP).

113. The network device according to claim 108, wherein the first frequency domain resource is located in a first frequency domain resource set, the second frequency domain resource is located in a second frequency domain resource set, and the first rule comprises:
the first frequency domain resource set and the second frequency domain resource set have an association relationship.

114. The network device according to claim 113, wherein a frequency domain interval between the first frequency domain resource set and the second frequency domain resource set is less than or equal to a first threshold, wherein the first threshold is greater than or equal to 0.

115. The network device according to claim 113 or 114, wherein a position of the first frequency domain resource set is determined by:
a position of the second frequency domain resource set; and
the frequency domain interval between the first frequency domain resource set and the second frequency domain resource set.

116. The network device according to claim 114 or 115, wherein the frequency domain interval is:
an interval between a starting frequency of the first frequency domain resource set and a starting frequency of the second frequency domain resource set;
an interval between a center frequency of the first frequency domain resource set and a center frequency of the second frequency domain resource set; or
an interval between an ending frequency of the first frequency domain resource set and an ending frequency of the second frequency domain resource set.

117. The network device according to any one of claims 113-116, wherein the first frequency domain resource set is a BWP to which the first resource belongs; and the second frequency domain resource set is a BWP to which the second resource belongs.

118. The network device according to any one of claims 108-117, wherein the first frequency domain resource belongs to a first allocated resource, and the first allocated resource comprises: a first transmission frequency domain resource that can be occupied by the first signal; and a first guard frequency domain resource occupied by a guard period.

119. The network device according to claim 118, wherein information of the first allocated resource comprises one or more of:
a ratio of the first transmission frequency domain resource to the first allocated resource;
a ratio of the first transmission frequency domain resource to the first guard frequency domain resource;
a ratio of the first guard frequency domain resource to the first allocated resource;
a size of the first transmission frequency domain resource;
a position of the first transmission frequency domain resource;
a size of the first guard frequency domain resource;
a position of the first guard frequency domain resource.

120. The network device according to claim 118 or 119, wherein the information of the first allocated resource satisfies one or more of: predefined, or configured by a network device.

121. The network device according to any one of claims 108-120, wherein the second frequency domain resource belongs to a second allocated resource, and the second allocated resource comprises: a second transmission frequency domain resource that can be occupied by the synchronization signal; and a second guard frequency domain resource occupied by a guard period.

122. The network device according to claim 121, wherein information of the second allocated resource comprises one or more of:
a ratio of the second transmission frequency domain resource to the second allocated resource;
a ratio of the second transmission frequency domain resource to the second guard frequency domain resource;
a ratio of the second guard frequency domain resource to the second allocated resource; a size of the second transmission frequency domain resource;
a position of the second transmission frequency domain resource;
a size of the second guard frequency domain resource;
a position of the second guard frequency domain resource.

123. The network device according to claim 121 or 122, wherein the information of the second allocated resource satisfies one or more of: predefined, or configured by a network device.

124. The network device according to any one of claims 107-123, wherein the first resource comprises a first time domain resource, the second resource comprises a second time domain resource, the first time domain resource belongs to N candidate time domain resources, part or all of the N candidate time domain resources are capable of transmitting the first signal, the second time domain resource is associated with the N candidate time domain resources, and N is a positive integer.

125. The network device according to claim 124, wherein the second time domain resource belongs to one or more of:
resources arranged periodically;
resources arranged according to a transmission requirement of the synchronization signal.

126. The network device according to claim 124 or 125, wherein a time interval between a time domain resource unit in which the second time domain resource is located and a target time domain resource unit in which the N candidate time domain resources are located is a first time interval, and the target time domain resource unit is determined based on the first time interval.

127. The network device according to claim 126, wherein the target time domain resource unit comprises a first time domain resource unit in which the N candidate time domain resources are located.

128. The network device according to claim 126 or 127, wherein the first time interval satisfies one or more of: predefined, or configured by a network device.

129. The network device according to any one of claims 126-128, wherein the target time domain resource unit comprises multiple time domain resource subunits, a time interval between an earliest time domain resource subunit of the target time domain resource unit and a time domain resource subunit occupied by the N candidate time domain resources in the target time domain resource unit is a second time interval, and the time domain resource subunit occupied by the N candidate time domain resources in the target time domain resource unit is determined based on the second time interval.

130. The network device according to claim 129, wherein the second time interval satisfies one or more of: predefined, or configured by a network device.

131. The network device according to claim 124 or 125, wherein a time interval between a time domain resource subunit in which the second time domain resource is located and a time domain resource subunit in which the N candidate time domain resources are located is a third time interval, and the time domain resource subunit in which the N candidate time domain resources are located is determined based on the third time interval.

132. The network device according to any one of claims 126-131, wherein the time domain resource unit comprises a frame; and/or the time domain resource subunit comprises a symbol.

133. The network device according to any one of claims 124-132, wherein, in a case where part of the N candidate time domain resources are capable of transmitting the first signal for the terminal device, the part of the N candidate time domain resources are determined based on one or more of:
an identifier of the terminal device;
an identifier of a terminal group to which the terminal device belongs;
an identifier of a sub-terminal group to which the terminal device belongs.

134. The network device according to any one of claims 124-133, wherein a sequence of the synchronization signal is used to indicate one or more of:
whether the N candidate time domain resources have transmitted the first signal;
which candidate time domain resources among the N candidate time domain resources have transmitted the first signal;
which candidate time domain resources among the N candidate time domain resources have not transmitted the first signal.

135. The network device according to any one of claims 107-134, wherein the synchronization signal is modulated by an on-off keying (OOK) scheme.

136. The network device according to any one of claims 107-135, wherein the synchronization signal comprises one or more of: a synchronization signal block (SSB), a primary synchronization signal (PSS), a secondary synchronization signal (SSS), a low power synchronization signal (LP-SS).

137. The network device according to any one of claims 106-136, wherein the first resource belongs to multiple wake-up frames, and the multiple wake-up frames are arranged periodically.

138. The network device according to claim 137, wherein the multiple wake-up frames are represented by one or more of:
a cycle;
one or more offsets within one cycle.

139. The network device according to claim 137 or 138, wherein a time domain resource in the wake-up frame that can be used for transmitting the first signal is indicated by the following parameter:
a symbol occupied by the time domain resource in the wake-up frame that can be used for transmitting the first signal; or
a subframe number occupied in the wake-up frame and a symbol occupied within the subframe number by the time domain resource in the wake-up frame that can be used for transmitting the first signal, and a symbol occupied within the subframe number.

140. The network device according to any one of claims 106-139, wherein the first signal comprises a low power wake-up signal (LP-WUS).

141. A terminal device, wherein the terminal device comprises a memory and a processor, the memory is configured to store a program, and the processor is configured to invoke the program from the memory to cause the terminal device to perform the method according to any one of claims 1-35.

142. A network device, wherein the network device comprises a memory and a processor, the memory is configured to store a program, and the processor is configured to invoke the program from the memory to cause the network device to perform the method according to any one of claims 36-70.

143. An apparatus, wherein the apparatus comprises a processor configured to invoke a program from a memory to cause the apparatus to perform the method according to any one of claims 1-70.

144. A chip, wherein the chip comprises a processor configured to invoke a program from a memory to cause a device equipped with the chip to perform the method according to any one of claims 1-70.

145. A computer-readable storage medium, wherein a program is stored thereon, the program causing a computer to perform the method according to any one of claims 1-70.

146. A computer program product, wherein the computer program product comprises a program, the program causing a computer to perform the method according to any one of claims 1-70.

147. A computer program, wherein the computer program causes a computer to perform the method according to any one of claims 1-70.
